# EUROPEAN PATENT SPECIFICATION

(11) **EP 2 947 538 B1**
(45) Date of publication and mention of the grant of the patent: **17.05.2017**
(21) Application number: 14199951.6
(22) Date of filing: 23.12.2014
(51) Int. Cl.: G06F 1/16, H04M 1/02, G06F 3/0488

(54) **Mobile terminal and method of controlling the same**
Mobiles Endgerät und Verfahren zur Steuerung davon
Terminal mobile et son procédé de commande

(30) Priority: 23.05.2014 KR 20140062458
(43) Date of publication of application: 25.11.2015
(73) Proprietor: LG Electronics Inc., Seoul 07336 (KR)
(72) Inventor: Cho, Jungsun, 137-893 Seoul (KR)
(74) Representative: Ter Meer Steinmeister & Partner

(56) References cited:
- EP-A2- 2 706 447
- WO-A1-2014/075451
- US-A1- 2013 222 268
- US-A1- 2013 300 697
- US-A1- 2013 332 870
- US-A1- 2014 101 535
- US-A1- 2014 118 258
- US-B1- 8 732 617

## Description

### BACKGROUND OF THE INVENTION

### 1. Field of the Invention

The present disclosure relates to a mobile terminal having a lateral display unit.

### 2. Background of the Invention

Terminals may be generally classified as mobile/portable terminals or stationary terminals according to their mobility. Mobile terminals may also be classified as handheld terminals or vehicle mounted terminals according to whether or not a user can directly carry the terminal.

As functions of the terminal become more diversified, the terminal can support more complicated functions such as capturing images or video, reproducing music or video files, playing games, receiving broadcast signals, and the like. By comprehensively and collectively implementing such functions, the mobile terminal may be embodied in the form of a multimedia player or a device.

Various attempts have been made to implement complicated functions in such a multimedia device by means of hardware or software. For example, a user interface environment allowing users to easily and conveniently search for and select functions is provided.

Also, as mobile terminals are considered as personal belongings to express users' personality, various design forms are requested. The design forms include structural modifications and improvement allowing user to more conveniently use a mobile terminal. As a structural modification and improvement, a lateral display unit and a user interface using the same may be taken into consideration.

US 2014/101535 A1 describes a multi-display apparatus including a first display, a second display, and a controller configured to display, on the first display, a first web browsing screen based on web page data, and to display, on the second display, when a first object is selected on the first web browsing screen, a second web browsing screen, which is linked with the first object.

US 2013/332870 A1 describes a mobile terminal including a display unit configured to display list information including a plurality of identification items corresponding to a plurality of message windows, respectively, when the plurality of message windows are open for message communication between or among a plurality of conversation participants, and a controller configured to invite at least some of conversation participants of a first message window corresponding to a first identification item to a second message window corresponding to a second identification item when the first identification item, among the plurality of identification items, partially overlaps with the second identification item according to a touch input applied to the display unit. US 2013/0300697 A1 describes a portable terminal having a bended display divided into a main region of a front surface and a sub-region of a side of the portable terminal and operating functions of the portable terminal in connection with the main region and the sub-region, and a method of operating the same are provided.

### SUMMARY OF THE INVENTION

Therefore, an aspect of the detailed description is to provide a mobile terminal capable of performing mutually a function mutually associated between lateral display units.

Another aspect of the detailed description is to provide a mobile terminal performing a function by utilizing a lateral display unit in a state in which power of a main display unit is turned off.

Another aspect of the detailed description is to provide a mobile terminal capable of recommending a function associated between lateral display units.

To achieve the objects and advantages and in accordance with the purpose of this specification, as embodied and broadly described herein, a mobile terminal according to the independent claim is provided. The mobile terminal may include: a terminal body including a front surface, a lateral surface, and a rear surface; a display unit including a first region disposed on one side of the terminal body and a second region disposed on the other side of the terminal body; and a controller configured to, when an event occurs, display a graphic object indicating the occurrence of the event in any one of the first and second
regions, and to, when a pre-set type of touch is applied to the graphic object, display notification information related to the graphic object in the other region different from the any one region to allow contents related to the event to be read, wherein when the notification information displayed in the other region is selected, the controller displays the contents related to the event in at least a portion of the other region to allow the contents related to the event to be read.

In an exemplary embodiment of the present disclosure, the notification information displayed in the other region may be a graphic object which was displayed in the any one region and which has been moved to the other region and currently displayed therein.

In an exemplary embodiment of the present disclosure, when the graphic object is moved to the other region from the any one region, the moved graphic object may not be displayed in the one region any longer.

In an exemplary embodiment of the present disclosure, the other region may have a particular region in which the moved graphic object is displayed, and when a pre-set period of time has lapsed, the particular region may disappear from the other region together with the graphic object displayed in the particular region.

In an exemplary embodiment of the present disclosure, in a state in which the particular region is not displayed in the other region, when a pre-set type of touch is applied to the other region, the particular region may be displayed in a sliding manner in the other region and a graphic object included in the particular region may be displayed together with the particular region.

In an exemplary embodiment of the present disclosure, a plurality of graphic objects corresponding to different events may be displayed in the any one region, the other region may include a first sub-region in which notification information related to the graphic object to which the pre-set type of touch has been applied is displayed and a second sub-region in which at least one of the plurality of graphic objects is displayed, the graphic object to which the pre-set type of touch has been applied, among the plurality of graphic objects, may be displayed in the first sub-region, and when any one of the plurality of graphic objects is selected, the other graphic objects, excluding the selected graphic object, may be displayed in the second sub-region.

In an exemplary embodiment of the present disclosure, when any one of the plurality of graphic objects is selected, the controller may output information related to the selected graphic object, to the vicinity of the selected graphic object, and move graphic objects displayed in the vicinity of the selected graphic object, among the plurality of graphic objects, to the second sub-region to display the same in the second sub-region.

In an exemplary embodiment of the present disclosure, when the selected graphic object is selected again, the controller may make the information related to the selected graphic object disappear, and move the graphic objects displayed in the second sub-region back to be displayed in the any one region.

In an exemplary embodiment of the present disclosure, as the graphic objects displayed in the second sub-region are moved to the any one region, the graphic objects may disappear from the second sub-region.

In an exemplary embodiment of the present disclosure, the display unit may further include a third region on the front surface thereof, and when a drag input toward the third region is applied to the selected graphic object, the controller may output an execution screen related to the selected graphic object to at least a portion of the third region.

In an exemplary embodiment of the present disclosure, when the drag input starts from any one of the first and second regions, passing through the third region, and reaches the other region, the controller may execute a pre-set function related to the selected graphic object.

In an exemplary embodiment of the present disclosure, in a case in which the selected graphic object is a graphic object denoting a message application, when the drag input moves from one region to reach the other region, the controller may transmit a call signal to an external device related to the message.

In an exemplary embodiment of the present disclosure, the controller may execute different functions depending on a direction of a flicking input applied to the graphic object denoting the occurrence of the event.

In an exemplary embodiment of the present disclosure, in a case in which the flicking input is an input applied in a first direction as an upward direction based on the front surface of the terminal body, the controller may display the graphic object to which the flicking input has been applied, in the other region, and in a case in which the flicking input is an input applied in a second direction as a downward direction based on the front surface of the terminal body, the controller may display detailed information related to the graphic object to which the flicking input has been applied, in at least a portion of one of the first and second regions.

In an exemplary embodiment of the present disclosure, the display unit may further include a third region on the front surface thereof, and in a case in which the flicking input is an input applied in a third direction from any one of the first and second regions to the other, the controller may display screen information related to the graphic object to which the flicking input has been applied, in at least a portion of the third region, and in a case in which the flicking input is an input applied in a fourth direction from any one of the first and second regions toward the outside of the output region of the display unit, the controller may make the graphic object to which the flicking input has been applied disappear from the display unit.

In an exemplary embodiment of the present disclosure, a plurality of graphic objects may be displayed in the first and second regions, and when at least one of the plurality of graphic objects displayed in the first and second regions is selected, the controller may display at least one screen information related to the at least one selected graphic object in at least a portion of the third region.

In an exemplary embodiment of the present disclosure, the at least one screen information may be displayed in a position corresponding to a position of the selected graphic object in the first region, and based on a touch applied to the at least one screen information, the controller may execute a pre-set function with respect to the at least one screen information.

In an exemplary embodiment of the present disclosure, in a state in which at least one graphic object is displayed in the first and second regions, when a first touch applied to both the first and second regions together is sensed, the controller may make the at least one graphic object disappear from the first and second regions, and when a second touch different from the first touch is sensed, the controller may output the at least one graphic object which has disappeared, again.

In an exemplary embodiment of the present disclosure, the display unit may further include a third region on the front surface thereof, and when a call signal is received, the controller may display notification information indicating the reception of the call signal in a portion of the first and second regions, and display a graphic object denoting a function related to the reception of the call signal in at least a portion of the third region.

In an exemplary embodiment of the present disclosure, the controller may execute a function related to the call signal by using the graphic object denoting the function of the call signal displayed in the third region, and when the function related to the call signal is executed, the controller may not output the notification information indicating the reception of the call signal any longer.

Further scope of applicability of the present application will become more apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1A is a block diagram of a mobile terminal in accordance with the present disclosure.
FIGS. 1B and 1C are conceptual views of one example of the mobile terminal, viewed from different directions.
FIG. 1D is a front perspective view of another example of the mobile terminal related to the present disclosure.
FIG. 1E is a rear perspective view of the mobile terminal illustrated in FIG. 1D.
FIG. 2 is a flow chart illustrating a method of controlling a lateral display unit according to an exemplary embodiment of the present disclosure.
FIGS. 3A and 3B are conceptual views illustrating a control method of FIG. 2.
FIGS. 4A and 4B are conceptual views illustrating a first sub-region displaying graphic objects to which a pre-set type of touch has been applied.
FIGS. 5A and 5B are views illustrating graphic objects output to first and second regions when any one of at least one graphic object displayed in the first region is selected.
FIGS. 6A, 6B, 6C, 6D, and 6E are conceptual views illustrating performing different functions according to directions of touches applied to graphic objects.
FIGS. 7A, 7B, and 7C are conceptual views illustrating a method of displaying execution screens of graphic objects displayed on both lateral display units.
FIGS. 8A through 8D are conceptual views illustrating a method of displaying execution screen information between both lateral display unit regions.
FIGS. 9A and 9B are conceptual views illustrating a control method when display units are provided on upper, lower, left, and right lateral portions based on a front surface of the terminal body.
FIGS. 10A through 10C are conceptual views illustrating a method of visually simplifying graphic objects displayed on a lateral display unit.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

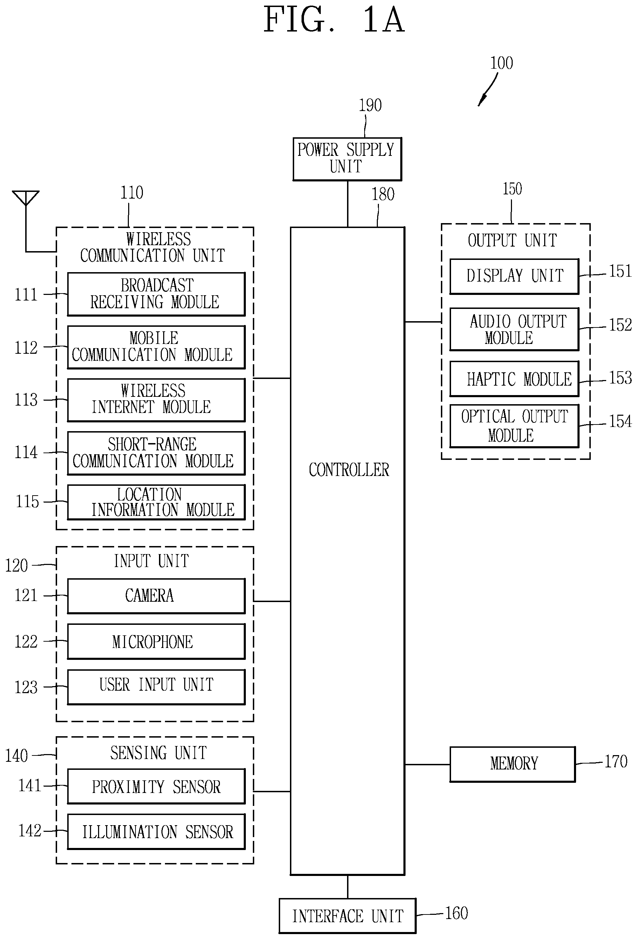

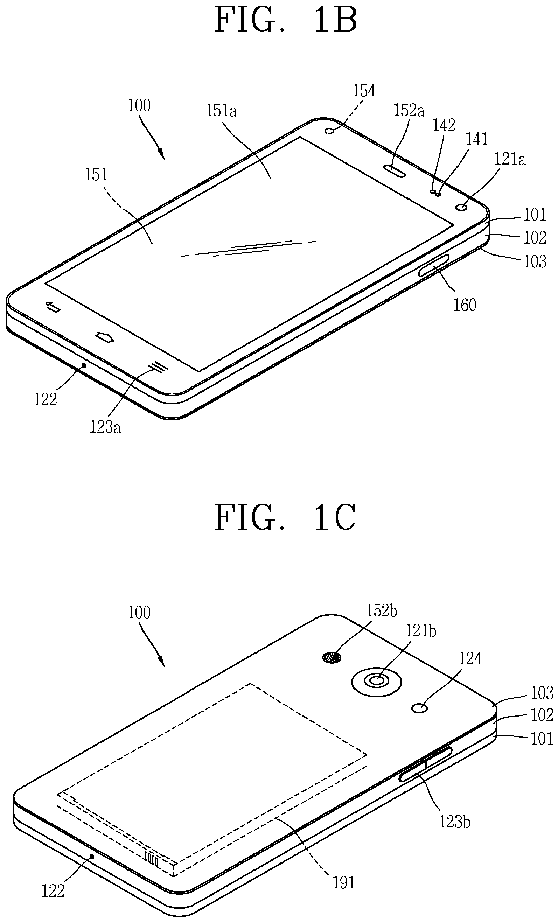

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server.

Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142. If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

At least some of the above components may operate in a cooperating manner, so as to implement an operation or a control method of a glass type terminal according to various embodiments to be explained later. The operation or the control method of the glass type terminal may be implemented on the glass type terminal by driving at least one application program stored in the memory 170.

Referring still to FIG. 1A, various components depicted in this figure will now be described in more detail.

Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE), LTE-A(Long Term Evolution-Advanced), and the like).

Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTH^{™}, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like). In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images.

A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151 a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121 b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151 a and the front case 101, between the front case 101 and the rear case 102, or between the rear case 102 and the rear cover 103, to hermetically seal an inner space when those cases are coupled.

The mobile terminal 100 may include the display unit 151, the first audio output module 152a, the second audio output module 152b, the proximity sensor 141, the illumination sensor 142, the optical output module 154, the first camera 121 a, the second camera 121b, the first manipulation unit 123a, the second manipulation unit 123b, the microphone 122, the interface unit 160, etc.

Hereinafter, the mobile terminal 100 will be explained with reference to FIGS. 1B and 1B. The display unit 151, the first audio output module 152a, the proximity sensor 141, the illumination sensor 142, the optical output module 154, the first camera 121 a and the first manipulation unit 123a are arranged on the front surface of the terminal body. The second manipulation unit 123b, the microphone 122 and the interface unit 160 are arranged on the side surfaces of the terminal body. The second audio output module 152b and the second camera 121 b are arranged on the rear surface of the terminal body.

However, it is to be understood that alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. For example, the display unit 151 may display information on an execution screen of an application program driven in the mobile terminal 100, or a User Interface (UI) or a Graphic User Interface (GUI) associated with such execution screen information.

The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151 a and a display on a rear surface of the window 151 a, or a metal wire which is patterned directly on the rear surface of the window 151 a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output unit 152a may be implemented as a receiver for transmitting a call sound to a user's ears, and the second audio output unit 152b may be implemented as a loud speaker for outputting each type of alarm sounds or a play sound of multimedia.

It may be configured such that the sounds generated from the first audio output module 152a are released along an assembly gap between the structural bodies (e.g., between the window 151 a and the front case 101). In this case, a hole independently formed to output audio sounds may not be seen or hidden in terms of appearance, thereby further simplifying the appearance of the mobile terminal 100.

The optical output module 154 can output a signal for indicating an event generation using light of a light source. Examples of events generated in the mobile terminal 100 may include message reception, call signal reception, a missed call, an alarm, a schedule notice, an email reception, information reception through an application, and the like. A signal output by the optical output module 154 may be implemented in such a manner that the mobile terminal emits monochromatic light or light with a plurality of colors. The signal output may be terminated as the mobile terminal senses that a user has checked the generated event, for example.

The first camera 121 a processes image data of still pictures or video acquired by an image capture device in a video capturing mode or an image capturing mode. The processed image frames may be displayed on the display unit 151, or may be stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may be implemented in a user's non-tactile manner, e.g., by a proximity touch, a hovering touch, etc.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121 b is shown located at the rear side of the terminal body and includes an image capturing direction that is substantially opposite to the image capturing direction of the first camera unit 121 a. If desired, second camera 121 a may alternatively be located at other locations, or made to be moveable, in order to have a different image capturing direction from that which is shown.

The second camera 121 b can include a plurality of lenses arranged along at least one line. The plurality of lenses may also be arranged in a matrix configuration. The cameras may be referred to as an "array camera." When the second camera 121 b is implemented as an array camera, images may be captured in various manners using the plurality of lenses and images with better qualities.

As shown in FIG. 1C, a flash 124 is shown adjacent to the second camera 121 b. When an image of a subject is captured with the camera 121 b, the flash 124 may illuminate the subject.

As shown in FIG. 1B, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 (refer to FIG. 1A) may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

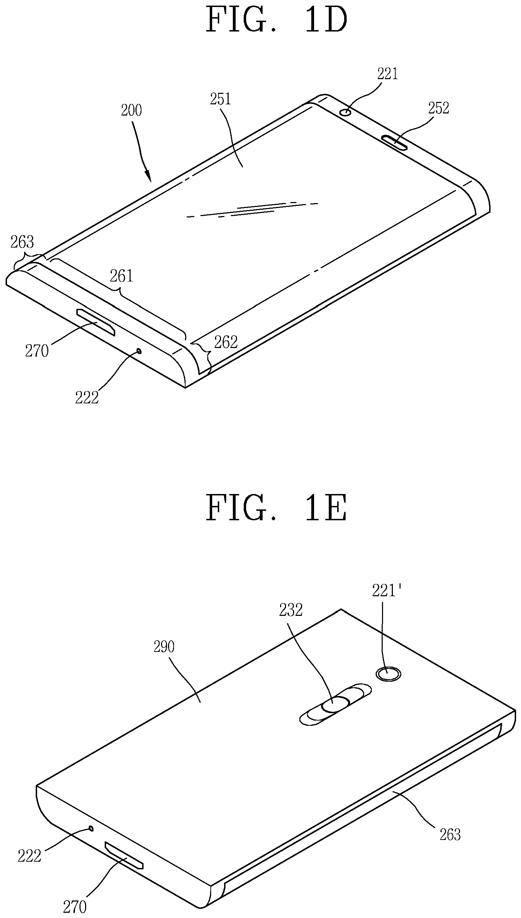

Meanwhile, the mobile terminal according to an exemplary embodiment of the present disclosure may have various design forms. Hereinafter, as a structural modification and improvement, a mobile terminal having a lateral display unit and a user interface using the same will be described. FIG. 1D is a front perspective view of another example of the mobile terminal related to the present disclosure, and FIG. 1E is a rear perspective view of the mobile terminal illustrated in FIG. 1D.

A disclosed mobile terminal 200 has a bar type terminal body. However, the present disclosure is not limited thereto and may be applicable to various structures such as a slide type mobile terminal, a folder type mobile terminal, a swing type mobile terminal, a swivel type mobile terminal, etc, in which two or more bodies are coupled to be relatively movable.

The terminal body includes a case (or casing, housing, cover, etc.) constituting an appearance. In this embodiment, the case may include a front case 201 and a rear case 202. Various electronic components are installed in a space between the front case 201 and the rear case 202. At least one intermediate case may be additionally disposed between the front case 201 and the rear case 202.

The cases may be formed by injection-molding a synthetic resin or may be formed of a metal such as stainless steel (STS) or titanium (Ti), etc.

A display unit 251, an audio output module 252, a camera module 221, etc., may be disposed on the terminal body, mainly on the front case 201. An interface 270, or the like, may be disposed on the lateral surfaces of the front case 201 and the rear case 202.

The display unit 251 occupies the most of a main surface of the front case 201. Namely, the display unit 251 is disposed on the front surface of the terminal and displays visual information. The display unit 251 according to an exemplary embodiment of the present disclosure extends to other surfaces of the terminal, as well as being provided on the front surface of the terminal. In detail, the display unit 251 includes a first region 261 and second regions 262 and 263 extending from the first region 261 and disposed on the lateral surface of the terminal body. Here, the lateral surface may be a surface visible to the user when the user views the mobile terminal from the side.

Meanwhile, at least a portion of the second regions 262 and 263 may be disposed on the front surface. For example, the second regions 262 and 263 may be formed on both the lateral surfaces and the front surfaces of the terminal. Here, whether the second regions 262 and 263 are visible from the front is determined depending on a structure in which the first and second regions 261, 262, and 263 are formed on the display unit 251.

For example, a window disposed on an upper surface of the display unit 251 may be formed such that both lateral surfaces thereof are bent, and accordingly, appearances in the front and lateral surfaces of the terminal body are formed by the window. Thus, the first region 261 and the second regions 262 and 263 may be connected to each other without a physical boundary surface. In this case, the display unit 251 may have a display element formed to be bent and installed to correspond to the window.

In another example, the display unit 251 may be a flexible display. The flexible display unit may include a display which is bendable, foldable, and rollable by external force. Here, the flexible display unit may include a general flexible display and an electronic paper (or e-paper).

Here, a general flexible display refers to a display which is fabricated on a thin, flexible substrate which is bendable, foldable, and rollable, like paper, while maintaining display characteristics of an existing flat panel display, and thus, which is light in weight and not brittle.

Also, e-paper, a display technology employing the general features of ink, is different from a general flat panel display, in that it uses reflective light. In case of e-paper, pictures or characters may be changed by using twist balls or by using electrophoresis using capsules.

In this manner, a terminal body in which both lateral surfaces of the display unit are bent due to the characteristics of a flexible material may be configured.

Meanwhile, in the above, the configuration in which the flexible display unit extends from the front surface to both lateral surfaces has been described, but in the present disclosure, three independent display units may be disposed on the front surface and both lateral surfaces. For example, the front display unit 261 and lateral display units 262 and 263 may be independent display units and may be disposed to be adjacent to one another.

An audio output unit 252 and a camera module 221 are disposed in a region adjacent to one end portion, among both end portions of the display unit, and a front input unit (not shown) and a microphone 222 may be disposed in a region adjacent to the other end portion.

The front input unit may include a plurality of manipulation units as an example of a user input unit 230 (please refer to FIG. 1). The manipulation units may be generally referred to as a manipulating portion, and various methods and techniques can be employed for the manipulation portion so long as they can be operated by the user in a tactile manner.

The display unit 251 may form a touch screen together with a touch sensor, and in this case, the touch screen may be a user input unit. Through this, a configuration in which a front input unit is provided on the front of the terminal may be provided. In this case, the mobile terminal may be configured such that an input manipulation with respect to the terminal body may be performed only through the display unit 251 and the rear input unit 232 as described hereinafter.

Referring to FIG. 1E, a camera 221' may additionally be disposed on the rear surface of the terminal body, in other words, on the rear case 202. The camera module 221' may have an image capture direction which is substantially opposite to that of the camera 221 (Please refer to FIG. 1 D), and have a different number of pixels than the camera module 221.

For example, the camera module 221 may have a smaller number of pixels to capture an image of the user's face and transmit such image to another party, and the camera module 221' may have a larger number of pixels to capture an image of a general subject and not immediately transmit the same in many cases. The camera modules 221 and 221' may be installed on the terminal body such that they can be rotatable or popped up.

A flash and a mirror may be additionally disposed adjacent to the camera module 221'. When an image of a subject is captured with the camera module 221', the flash illuminates the subject. The mirror allows the user to see himself when he wants to capture his own image (i.e., self-image capturing) by using the camera module 221'.

An audio output unit (not shown) may be additionally disposed on the rear surface of the terminal body. The audio output unit may implement a stereoscopic function along with the audio output unit 252 (please refer to FIG. 1 D), and may be used for implementing a speaker phone mode during call communication.

Namely, the second audio output unit configured as a speaker on the rear surface may be formed together with the audio output unit 252 (first audio output unit) disposed on the front surface of the terminal configured as a receiver. However, the present disclosure is not limited thereto and the second output unit may be provided on the side of the terminal.

A power supply unit 290 for supplying power to the mobile terminal 200 may be installed on the terminal body. The power supply unit 290 may be installed in the terminal body or may be directly detached from the outside of the terminal body.

As illustrated, a rear input unit 232 may be disposed on the rear surface of the terminal body. The rear input unit 232 may be disposed below the camera module 221', for example.

The rear input unit 232 is manipulated to receive a command for controlling an operation of the mobile terminal 200. Contents inputted by the rear input unit 232 may be variably set. For example, a command such as turning on or off of power, starting, ending, scrolling, etc., a command such as adjusting the volume of a sound outputted from the audio output unit 252 or conversion into a touch recognition mode of the display unit 251, etc., may be received. However, the present disclosure is not limited thereto and the terminal may include only any one of the front input unit and the rear input unit 232 or both.

Meanwhile, as mentioned above, the controller 180 (Please refer to FIG. 1A) may control a function of the terminal by using the display unit disposed on a lateral surface of the terminal.

Hereinafter, a method of controlling a function of the terminal by utilizing display units disposed on both lateral surfaces of the terminal will be described with reference to the accompanying drawings.

For the purposes of description, the first region 262 refers to a display region disposed on a left lateral surface among both lateral surfaces based on the front surface of the terminal, and the second region 263 refers to a right lateral surface among the both lateral surfaces based on the front surface of the terminal. The third region 261 refers to a display disposed on the front surface of the terminal (front display).

The display unit 251 according to an exemplary embodiment of the present disclosure is illustrated to have display regions on the left and right lateral surfaces, but alternatively, the display unit 251 may include a lateral display unit on either the left side or the right side based on the third region 261 corresponding to the front surface of the display unit 251. In the present disclosure, for the purposes of description, the display unit 251 including display regions (or display units) on the front surface, on the left lateral surface, and on the right lateral surface will be described as an example.

Also, in the present disclosure, the front display unit (or the third region) will be described by using reference numeral "261", and the lateral display units (or first region and second region) will be described by using reference numerals "262" and "263". Also, for contents that can be applied to all of the front and lateral display units without having to differentiate the front and lateral display units, "display unit 251" will be used, instead of the reference numerals denoting the front and lateral display units.

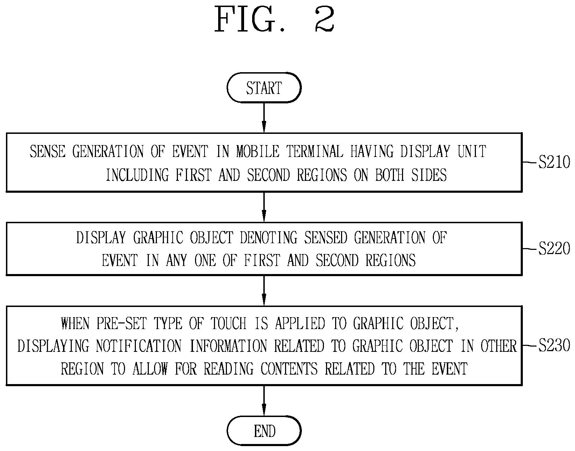

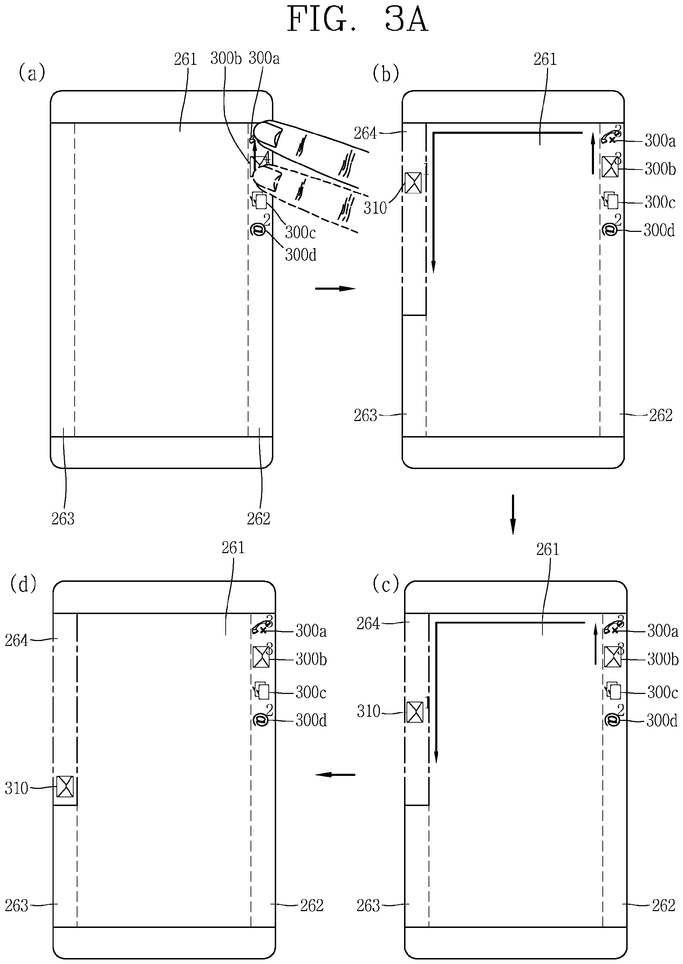

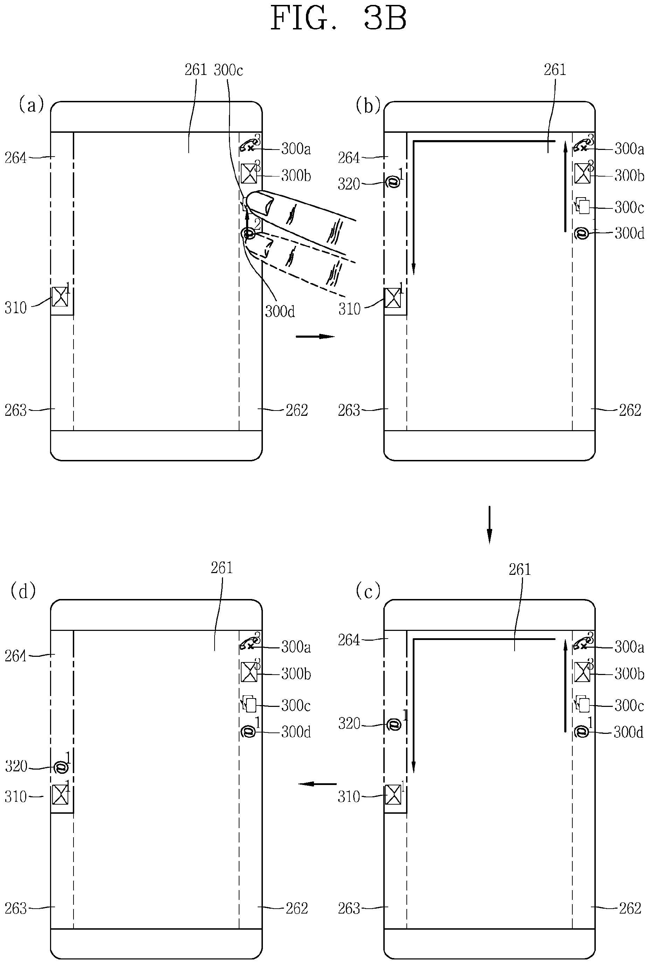

Hereinafter, a method of performing various functions by utilizing both lateral display units will be described in detail. FIG. 2 is a flow chart illustrating a method of controlling a lateral display unit according to an exemplary embodiment of the present disclosure, and FIGS. 3A and 3B are conceptual views illustrating a control method of FIG. 2.

The mobile terminal according to an exemplary embodiment of the present disclosure may sense the occurrence of an event in step S210.

The event may refer to generation of an operation related to a function that can be executed in the mobile terminal. Here, the function that can be executed in the mobile terminal may refer to every function that may be executed in the mobile terminal, such as a function related to an application installed in the mobile terminal, a call function, etc.

Also, the event may occur in the mobile terminal or may be received from an external terminal through a communication network to occur. For example, the event may be an event in which notification information is generated at a time previously set by a user, an event in which information is received from an external terminal, an event in which a call signal is received from an external terminal, etc.

In detail, the event may be an event in which a call signal, received from an external terminal, fails to receive, an event in which a message is received from an external terminal, an event in which an e-mail is received from an external terminal, an event in which a notification previously set by the user is generated, etc.

When the occurrence of the event is sensed, the mobile terminal according to an exemplary embodiment of the present disclosure may display a graphic object denoting the sensed occurrence of the event in any one of the first and second regions of the display units disposed on both lateral surfaces in step S220.

When the occurrence of the event is sensed, the controller 180 may output notification information indicating that the event has occurred. The notification information may be output using at least one of a visual method, an acoustic method, and a tactile method. For example, the notification information may be output as a graphic object to a region of the display unit 251.

Meanwhile, when the occurrence of the event is sensed, the controller 180 may output a graphic object indicating that the event has occurred to any one of the lateral display units 262 and 263.

Namely, in an exemplary embodiment of the present disclosure, without using the display unit 261 disposed on the front surface 261, the graphic object denoting the occurrence of the event may be visually output. To this end, the controller 180 may activate at least only a portion of the display unit 251.

Here, "activation" of the display unit 251 may refer to a state in which a backlight of the display unit 251 is turned on and screen information related to a function executed in the mobile terminal is output. Also, "deactivation" of the display unit 261 may refer to a state in which the backlight of the display unit 251 is turned off and screen information is not output.

In the mobile terminal according to an exemplary embodiment of the present disclosure, the controller 180 may control ON/OFF of each of the regions of the display unit 251. For example, the controller 180 may activate a region of any one among the first region, the second region, and the third region.

In this manner, the controller 180 may activate any one among the first region, the second region and the third region, and output a graphic object denoting the occurrence of the event to the activated region. For example, even in a state in which the third region disposed on the front surface is deactivated, the controller 180 may activate any one among the first and second regions to output a graphic object denoting the occurrence of the event to the activated region.

In addition, even in a state in which the third region 261 disposed on the front surface is covered by a cover (which covers the front display unit) (namely, the front display unit is not visible), the user may recognize the occurrence of an event by using the lateral display units 262 and 263.

Meanwhile, it will be obvious to a person skilled in the art that a graphic object may be output to the display units 262 and 263 even in a state in which the front display unit 261 is activated.

Graphic objects corresponding to the number of events, individually denoting the generated events, may be displayed on any one display unit 262. For example, as illustrated in (a) of FIG. 3, graphic objects may be displayed for their respective events.

After the user checks a generated event through the corresponding graphic object, the graphic object denoting the generated event may not be output on the display unit 251 any longer. For example, in a case in which the graphic object is a graphic object denoting reception of a message received from an external terminal, when received message is checked by the user, the controller 180 may make the graphic object disappear from the display unit 251.

Here, the checking of the generated event may refer to a case in which a touch is applied to the graphic object by the user, a case in which contents related to the event is output to the display unit 261, a case in which a user requests for not outputting the graphic object any longer is received, etc.

Meanwhile, to which of the first and second regions the graphic object is to be output may be determined based on a pre-set condition. The pre-set condition may be previously set by the user or may be set in advance when the mobile terminal is released from the factory.

For example, the pre-set condition may be a condition as to whether the user currently uses the mobile terminal with his or her left or right hand. In detail, the controller 180 may determine the user's hand that currently holds the mobile terminal based on a touch region sensed in the first and the second region, the number of touch points, etc. Here, depending on whether the user holds the mobile terminal with his or her right or left hand, the controller 180 may determine a region in which a graphic object is to be output.

For example, in a case in which the user currently holds the mobile terminal with his or her right hand, the controller 180 may determine that the user controls the display unit with a thumb part of right hand, and output a graphic object to a region that the thumb of the right hand comes into contact. Namely, the controller 180 determines which of the user's hands is currently used for the mobile terminal, and controls an output region of a graphic object to allow the user to execute a function related to the graphic object more conveniently.

In a state in which the graphic object is displayed in any one of the first and second regions, when a pre-set type of touch is applied to the graphic object, the mobile terminal according to an exemplary embodiment of the present disclosure may display notification information related to the graphic object in the other of the first and second regions to allow the user to read contents related to the event in step S230.

The controller 180 may execute various functions by using the lateral display units 262 and 263. Also, by using a touch applied to any one lateral display unit 262 among the both lateral display units 262 and 263, the controller 180 may control the other lateral display unit 263. For example, when a touch applied to a graphic object displayed on the any one lateral display unit 262 is sensed, the controller 180 may output screen information for executing a function related to the graphic object on the other lateral display unit 263.

The function related to the graphic object may be a function to set contents related to the event such that the contents is read later, a function to output the contents of the event to the display unit, a function not to output the graphic object denoting the generated event any longer, a function to display screen information regarding execution of the event in one region of the display unit, etc.

Here, the function to set the contents related to the event such that the contents is read later may be referred to as a "storage function", "important message setting function", etc. The storage function may be a function to display notification information in one region of the display unit 251 to allow checking of contents related to the event again later according to a user request, after the contents related to the event is checked. Namely, the notification information displayed to allow checking of the contents related to the event may be displayed on the display unit 251 continuously, independent from whether the user has checked the contents related to the event.

When a pre-set type of touch applied to the graphic object is sensed, the controller 180 may execute a function related to the graphic object. The pre-set type of touch may be various preset touch types such as a flicking touch, a short touch, a long touch, a double touch, a drag touch, etc. For example, the preset type of touch may be a flicking touch in a particular direction.

Also, when different touches are sensed on the graphic object, the controller 180 may execute different functions. In detail, when a first touch is applied the controller 180 may execute a first function, and when a second touch different from the first touch is applied, the controller 180 may execute a second function.

For example, when a first touch applied to the graphic object upwardly based on the front surface of the display unit 251 is sensed, the controller 180 may execute the storage function to store contents of the event related to the graphic object, and when a second touch applied downwardly based on the front surface of the display unit 251 is sensed, the controller 180 may execute a function to output contents of the event related to the graphic object to one region of the display unit 251.

Also, when the function with respect to the graphic object is executed, the graphic object may disappear from the display unit. Namely, the graphic object denoting the occurrence of the event may be temporarily output to denote the occurrence of the event before the function related to the event is executed.

For example, as illustrated in (a) of FIG. 3A, one or more graphic objects 300a, 300b, 300c, and 300d respectively denoting the occurrence of events may be displayed in any one of the first and second regions. For example, the at least one region may be the first region 262. Hereinafter, any one region will be referred to as the first region 262 and the other region will be referred to as the second region 263.

Here, the number of times of the occurrence of the event denoted by the graphic objects may be displayed in the vicinity of each of the graphic objects 300a, 30b, 300c, and 300d. As illustrated in (b) of FIG. 3A, the numbers in the vicinity of the graphic objects 300a, 300b, 300c, and 300d, may denote the numbers of times of the occurrence of the events denoted by the graphic objects 300a, 300b, 300c, and 300d, respectively. For example, in a case in which the graphic object 300b relates to the occurrence of a message reception event, the number denoted in the vicinity of the graphic object 300b may be the number of received messages.

The controller 180 may sense a preset type of touch applied to any one of the graphic objects 300a, 300b, 300c, and 300d. For example, as illustrated in (a) of FIG. 3A, the controller 180 may sense a flicking input applied in a first direction as an upward direction based on the front surface of the display unit 251.

Here, as illustrated in (d) of FIG. 3A, when the pre-set type of touch is applied to the graphic object 300b, the controller 180 may display notification information 310b related to the graphic object 300b in the second region 263 such that contents of the event denoted by the graphic object 300b may be read.

Here, the notification information 310 may be a user interface allowing the user to quickly view contents related to the event, no matter whether the user has checked the generated event.

In this case, the notification information 310 may be information displayed in a region different from the previously displayed region as the graphic object 300b has been moved.

For example, referring to (b) to (d) of FIG. 3A, when the pre-set type of touch is applied to the graphic object 300b, the controller 180 may move the graphic object 300b from the first region 262 to the second region 263. Namely, the user may view that the graphic object 300b is moved from the first region 262 to the second region 263 and displayed in the second region. The graphic object 300b may be moved as if both lateral display units are connected like a pipe and an object is moved within the pipe. In this case, as illustrated in (b) of FIG. 3A, the graphic object 300b may be moved in the direction of the arrows.

When the graphic object 300b is moved to the second region 263 and displayed as the notification information 310, the controller 180 may not display the graphic object 300b any longer in the first region 62. For example, as illustrated in (c) of FIG. 3A, the graphic object 300b to which the pre-set type of touch has been applied is a graphic object denoting reception of messages, and the number of received messages may be indicated in a portion of the graphic object. In this case, when any one of the messages is moved to the second region 263, the controller 180 may reduce the number of the received messages.

Also, although not shown, when the received message is one message, the graphic object indicating the message may not be displayed in the first region 262 any longer. Also, the other region 263 may include a first sub-region 264 displaying the notification information 310. The controller 180 may display the first sub-region 264 such that it is visually discriminated from the other region of the second region 263.

Also, a plurality of notification information may be displayed in the first sub-region 264. For example, as illustrated in (a) of FIG. 3B, in a state in which the notification information 310 is output on the first sub-region 264, the controller 180 may sense a pre-set type of touch applied to the graphic object 300d among the graphic objects 300a, 300b, 300c, and 300d displayed in the first region.

In this case, the controller 180 may move the touch-applied graphic object 300d to the second region. In this case, the moved graphic object 300d may be notification information 320 displayed in the second region. For example, as illustrated in (b) to (d) of FIG. 3B, the graphic object 300d may be moved from the first region to the second region.

Thereafter, when the graphic object 300d reaches a region adjacent to the region in which the notification information 310 is displayed, the graphic object 300d may be stopped and displayed in the adjacent region. For example, as illustrated in (d) of FIG. 3B, two notification information 310 and 320 may be displayed.

When the notification information 310 is displayed in the second region 263, the user may read contents related to the event by using the notification information 310.

So far, the method of performing a function related to an event by utilizing the first and second regions disposed on both sides of the mobile terminal has been described. Thus, even in a state in which the display unit is deactivated, the user may execute a function related to an event by using the lateral display units.

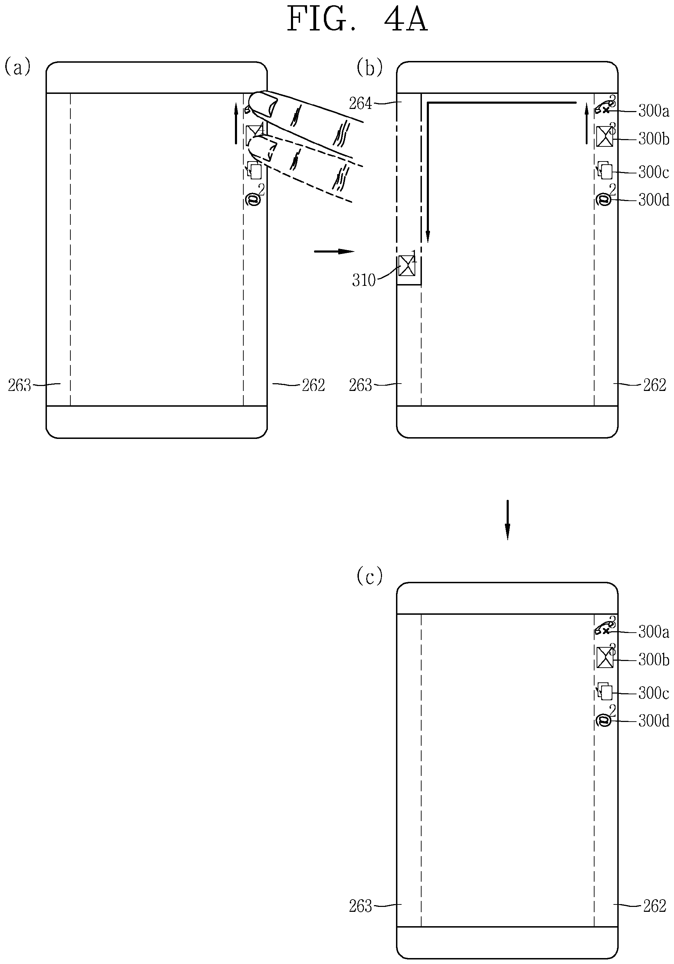

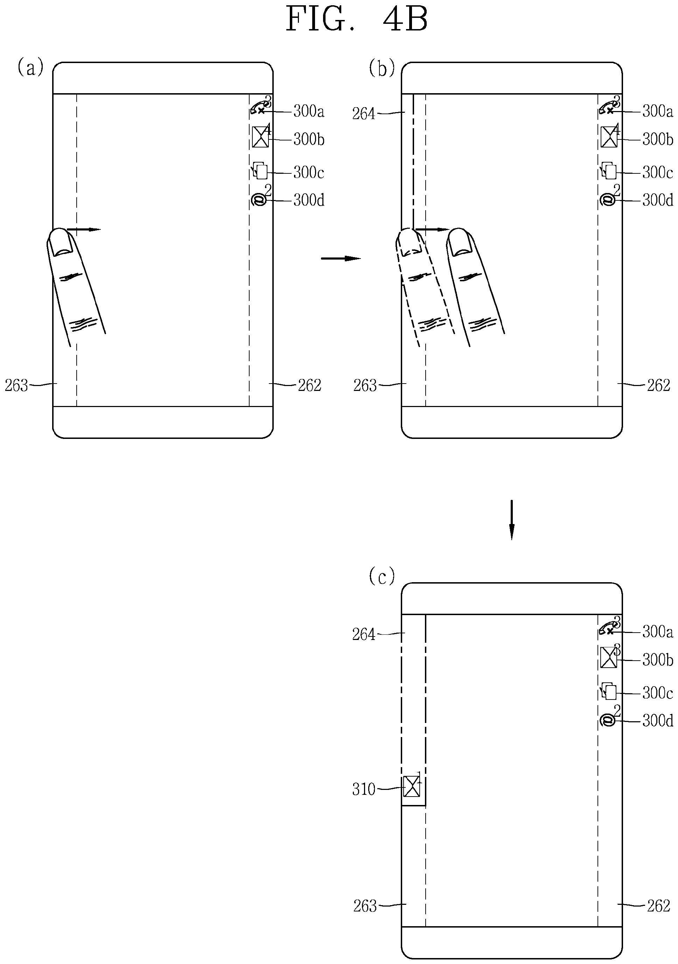

Hereinafter, the first sub-region in which a graphic object to which a pre-set type of touch has been applied is displayed will be described in detail with reference to the accompanying drawings. FIGS. 4A and 4B are conceptual views illustrating the first sub-region in which a graphic object to which a pre-set type of touch has been applied is displayed.

At least one graphic object indicating the occurrence of an event may be displayed in any one of the first and second regions, and notification information corresponding to the graphic object to which the pre-set type of touch has been applied, among the at least one graphic object, may be displayed in the other region.

Also, the second region 264 may include the first sub-region 264 in which the notification information 310 corresponding to the graphic object 300b to which the pre-set type of touch has been applied is displayed. For example, as illustrated in (a) and (b) of FIG. 4A, when a pre-set type of touch is applied to the graphic object 300b among the at least one graphic object 300a, 300b, 300c, and 300d, the controller 180 may display the notification information 310 corresponding to the graphic object 300b to which the pre-set type of touch has been applied, in the second region 264. In this case, the notification information 310 may be displayed in the first sub-region 264 of the second region 263.

Meanwhile, the first sub-region 264 may be a region temporarily displayed in the second region 263. For example, as illustrated in (a) of FIG. 4A, when a pre-set type of touch is sensed in the graphic object 300b among the at least one graphic object 300a, 300b, 300c, and 300d displayed in the first region 262, the first sub-region 264 may be displayed in the second region 263. Also, as illustrated in (b) of FIG. 4A, when a pre-set period of time during which an additional control command is not applied has lapsed (namely, when an additional control command is not applied for a pre-set period of time), the displayed first sub-region 264 may disappear. When the first sub-region 264 disappears, the controller 180 may make the notification information 310 displayed in the first sub-region 264 disappear together.

In this manner, in an exemplary embodiment of the present disclosure, screen information related to performing a function other than the notification information 310 may be displayed in the second region.

Meanwhile, the first sub-region may be displayed again in the second region 263 according to a user request. The user request may be a drag input applied to the second region in a pre-set direction. For example, as illustrated in(a) of FIG. 4B, the user may apply a drag input in a direction toward the first region 262 from the second region 263.

In this case, as illustrated in (b) of FIG. 4B, at least a portion of the first sub-region 264 may be output on the second region 263 according to the user's drag input. Also, as illustrated in (c) of FIG. 4B, when the first sub-region 264 is output, the notification information 310 may also be output.

So far, the output state of the region in which the notification information is displayed has been described. In this manner, user convenience related to the notification information may be enhanced. In addition, according to an exemplary embodiment of the present disclosure, the second region may be variously utilized.

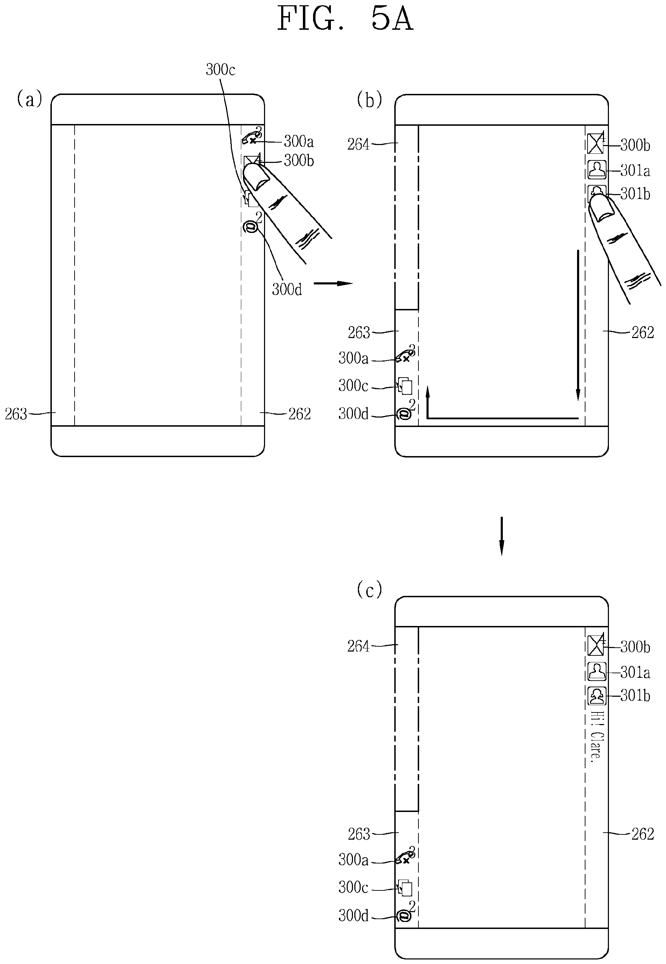

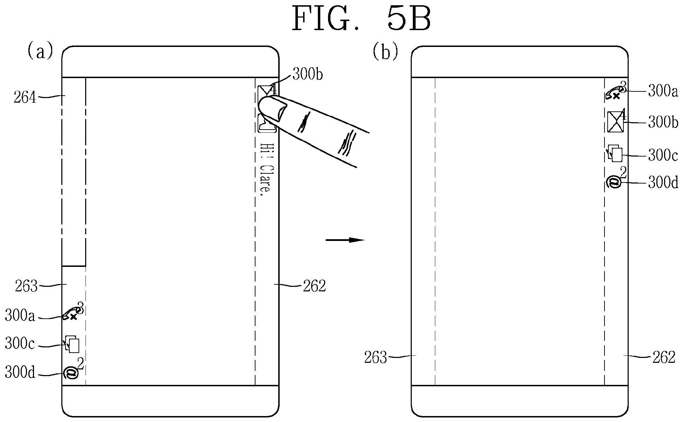

Hereinafter, graphic objects output to the first and second regions when any one of at least one graphic object displayed in the first region is selected will be described. FIGS. 5A and 5B are views illustrating graphic objects output to first and second regions when any one of at least one graphic object displayed in the first region is selected.

In an exemplary embodiment of the present disclosure, at least one graphic object 300a, 300b, 300c, and 300d indicating the occurrence of an event may be displayed in the first region 262, and notification information related to a function executed in the first region 262 may be displayed in the second region 263.

When the graphic object 300b among the at least one graphic object 300a, 300b, 300c, and 300d is selected, the controller 180 may execute a function related to the selected graphic object 300b. For example, in a case in which the selected graphic object 300b is a graphic object denoting a message application, when the graphic object 300b is selected, a function related to the message application may be executed.

In this case, execution screen information related to the selected graphic object 300b may be displayed in at least a portion of the first region. In detail, when the graphic object 300b, among the at least one graphic object 300a, 300b, 300c, and 300d, is selected, execution screen information 301 a and 301 b may be displayed in the vicinity of the region in which the graphic object 300b is displayed. Also, the other graphic objects 300a, 300c, and 300d which have been displayed in the vicinity of the graphic object 300b may not be displayed in the first region 262 any longer.

For example, as illustrated in (a) and (b) of FIG. 5A, when the graphic object 300b indicating the message application is selected, at least one execution screen information 301 a and 301 b indicating an external terminal which has transmitted a message may be output. Here, the at least one execution screen information indicating an external terminal may be identification information of the external terminal which has transmitted a message. For example, the identification information may be a user name, a user image, and the like, of the external terminal.

Here, the other graphic objects 300a, 300c, and 300d which have been displayed in the vicinity of the graphic object 300b may be displayed in the second region 263. In this case, the second region 263 may include a second sub-region in which the other graphic objects 300a, 300c, and 300d are displayed. Here, the second sub-region may be a region which does not overlap the first sub-region 264.

For example, as illustrated in (b) of FIG. 5A, the other graphic objects 300a, 300c and 300d may be moved downwardly based on the front surface of the display unit from the first region 262 and displayed in the lower region of the second sub-region in order. Namely, the user may view an image in which the other graphic objects 300a, 300c, and 300d are moved to be displayed in the second region 263. Namely, as illustrated in (b) of FIG. 5A, the other graphic objects 300a, 300c, and 300d may be moved in the arrow direction.

In addition, when the graphic object 300b is selected from among the at least one graphic object 300a, 300b, 300c, and 300d, the controller 180 may move the other graphic objects 300a, 300c, and 300d to the second sub-region and display graphic objects 301 a and 301 b denoting relevant functions in the vicinity of the selected graphic object 300b.

Here, as illustrated in (b) of FIG. 5A, when the graphic object 301 b, among the graphic objects 301 a and 301 b denoting functions related to the graphic object 300b, is selected, screen information related to the graphic object 301 b may be output to the vicinity of the graphic object 301 b. for example, as illustrated in (c) of FIG. 5A, the graphic object 301 b may be a graphic object related to a message and contents of the message may be displayed in the vicinity of the graphic object 301 b.

Meanwhile, although not shown, in a state in which the screen information related to the graphic object 301 b is output on the vicinity of the graphic object 301 b, when a pre-set type of touch applied to the screen information is sensed, the controller 180 may execute a function related to the screen information. For example, in a case in which the screen information is information indicating contents of the message, when a pre-set type of touch applied to the contents of the message is sensed, the controller 810 may execute at least one among a function to keep the message in storage, a function to check the message and not to output notification information any longer, and a function to scroll the contents.

Also, in a state in which execution screen information related to the graphic object 300b is displayed in the first region 262 and the other graphic objects 300a, 300c, and 300d are displayed in the second region 263, when the graphic object 300b is selected again, the controller 180 may display the other graphic objects 300a, 300c, and 300d again in the first region 262.

For example, as illustrated in (a) of FIG. 5B, when a touch is applied to the graphic object 300b again, the controller 180 may not output the execution screen information related to the graphic object 300b any longer in the first region 262. Also, the controller 180 may display the other graphic objects 300a, 300c, and 300d, which have been displayed in the second region 263, in the first region 262.

In this case, the other graphic objects 300a, 300c, and 300d in the state in which they were displayed in the first region 262 before having been moved to the second region 263, may be displayed in the first region 262 as is. For example, the other graphic objects 300a, 300c, and 300d may be displayed in the same output positions.

So far, the information displayed in the second region according to selection of graphic objects with respect to the first region has been described. In this manner, the user may effectively use the first region and the second region.

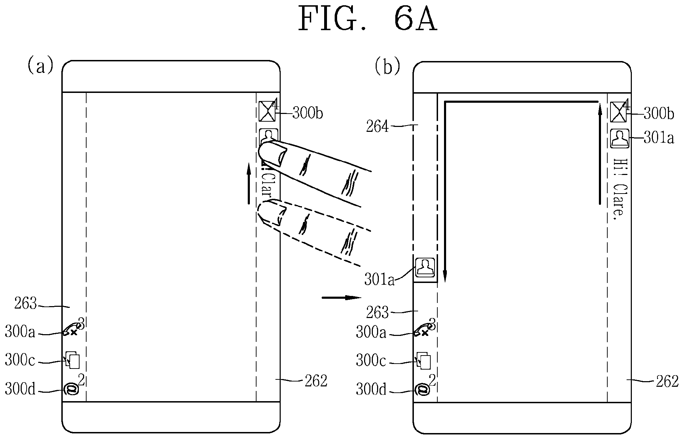

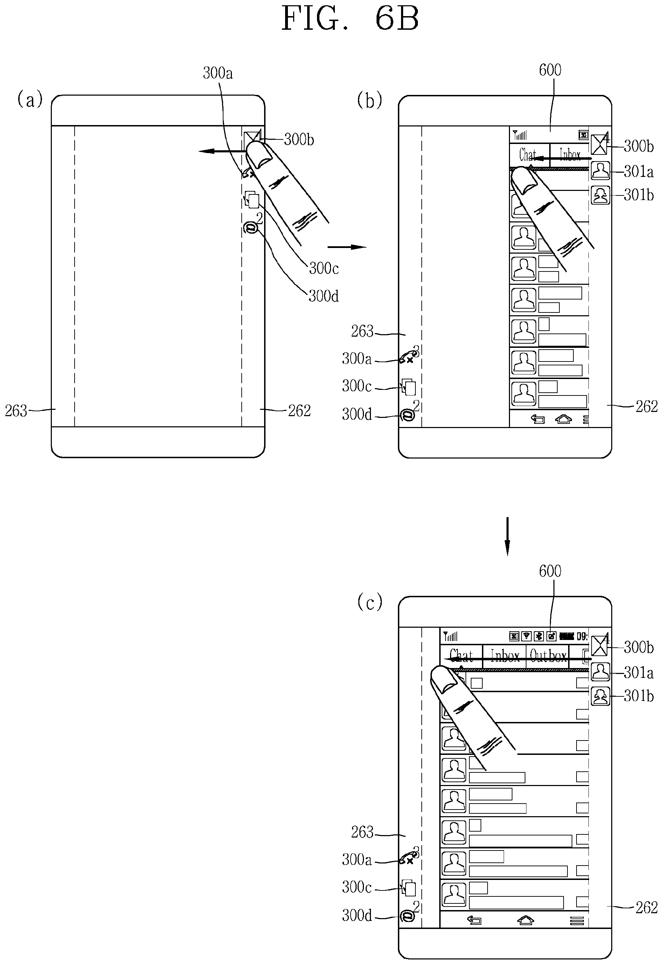

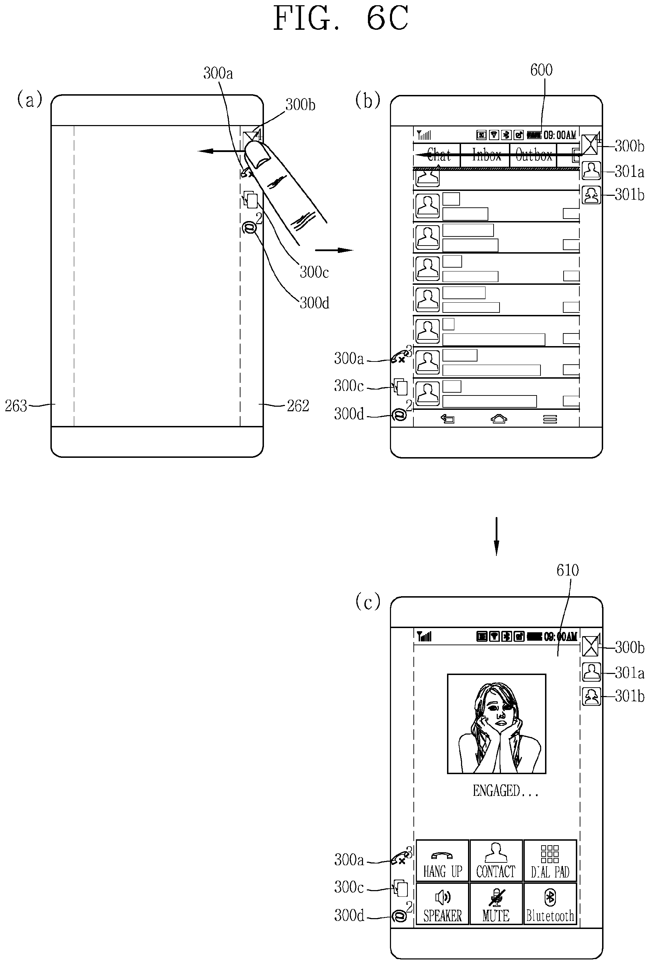

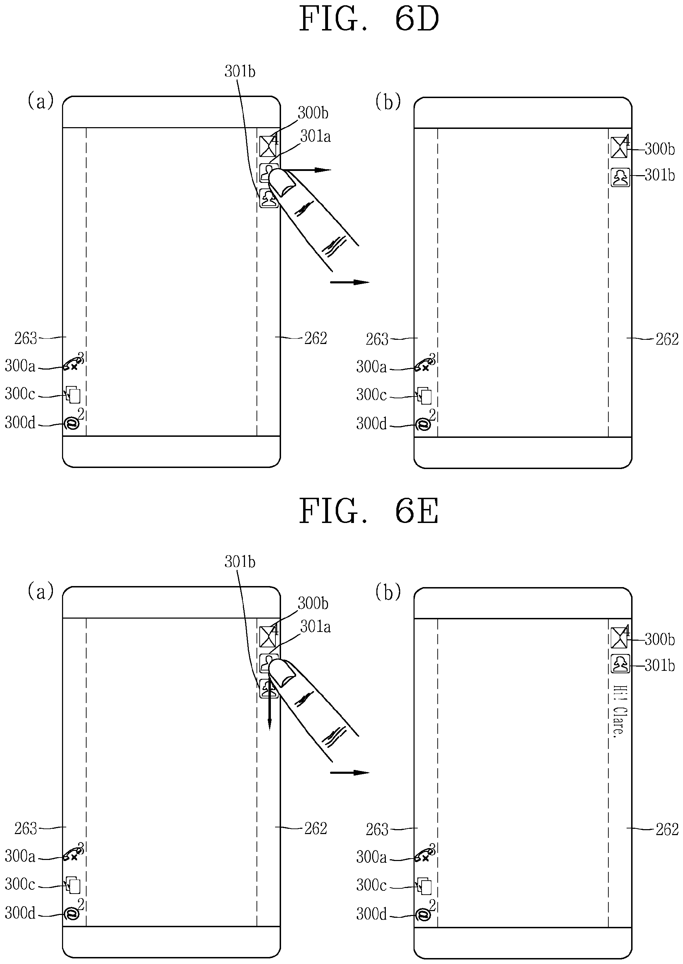

Hereinafter, executing different functions according to different types of touch applied to graphic objects displayed in the first region will be described. FIGS. 6A, 6B, 6C, 6D, and 6E are conceptual views illustrating performing different functions according to directions of touches applied to graphic objects.

The controller 180 may execute different functions according to touch types applied to graphic objects displayed in the first region 262. In this case, the executed functions may be related to the graphic objects.

For example, as illustrated in (a) and (b) of FIG. 6A, when a flicking input is applied to the graphic object 301 a displayed in the first region 262 in a first direction as an upward direction based on the front surface of the display unit, the controller 180 may display notification information 301 a in the second region 263 to allow contents of an event denoted by the graphic object 301 a to be read. In this case, the notification information 301 a may be displayed as the graphic object 301 a has been moved. Also, the notification information 301 a may be displayed in the first sub-region 264 of the second region 263.

Meanwhile, when a flicking input is applied to the graphic object 300b displayed in the first region 262 in a second direction as a downward direction based on the front surface of the display unit, the controller 180 may display execution screen information of the graphic object 300b. For example, as illustrated in (a) and (b) of FIG. 6E, when a flicking touch in the second direction is applied to the graphic object indicating the generation of a message is applied, the controller 180 may display contents of the message in the first region 262.

Also, when a flicking input is applied to the graphic object displayed in the first region 262 in a third direction from the first region 262 toward the second region 263, an execution screen related to the graphic object 300b may be displayed in at least a portion of the third region 261.

For example, as illustrated in (a) and (b) of FIG. 6B, when a drag input in the third direction is applied to the graphic object 300b indicating generation of a message, the controller 180 may display execution screen information 600 related to the message in at least a portion of the third region 261.

In this case, the execution screen information 600 may be displayed in a region corresponding to the point to which the drag input has been applied in the third region 261. For example, as illustrated in (b) and (c) of FIG. 6B, the execution screen information 600 may be displayed in a region corresponding to the point to which the drag input has been applied.

In this case, when the drag input is terminated, the controller 180 may display the execution screen information 600 in the region corresponding to a point at which the drag input is terminated.

Also, when the drag input is continuously applied from the first region 262 to the second region 263, the controller 180 may execute a speed function related to the graphic object 300b to which the drag input has been applied. For example, as illustrated in (a) and (b) of FIG. 6C, when a point to which the drag input has been applied is in the third region 261, execution screen information 600 may be displayed. In addition, as illustrated in (c) of FIG. 6C, when the point to which the drag input has been applied reaches the second region 263, the controller 180 may execute a function to transmit a call signal to an external terminal.

In this case, the external terminal may be an external terminal related to the graphic object 300b to which the drag input has been applied. Also, execution screen information 610 related to transmission of the call signal may be displayed in the third region 264.

Also, as illustrated in (a) and (b) of FIG. 6D, when a drag input in a fourth direction toward outside of an output region of the display unit is applied to the graphic object 300b displayed in the first region 262, the controller 180 may make the graphic object 300b disappear from the display unit. Namely, the user may stop notifying the occurrence of the event with respect to the graphic object 300b indicating the occurrence of the event.

So far, execution of different functions based on touches applied to the graphic object displayed in the first region in different directions has been described. In this manner, the user may easily utilize various operations using the lateral display units through a simple manipulation.

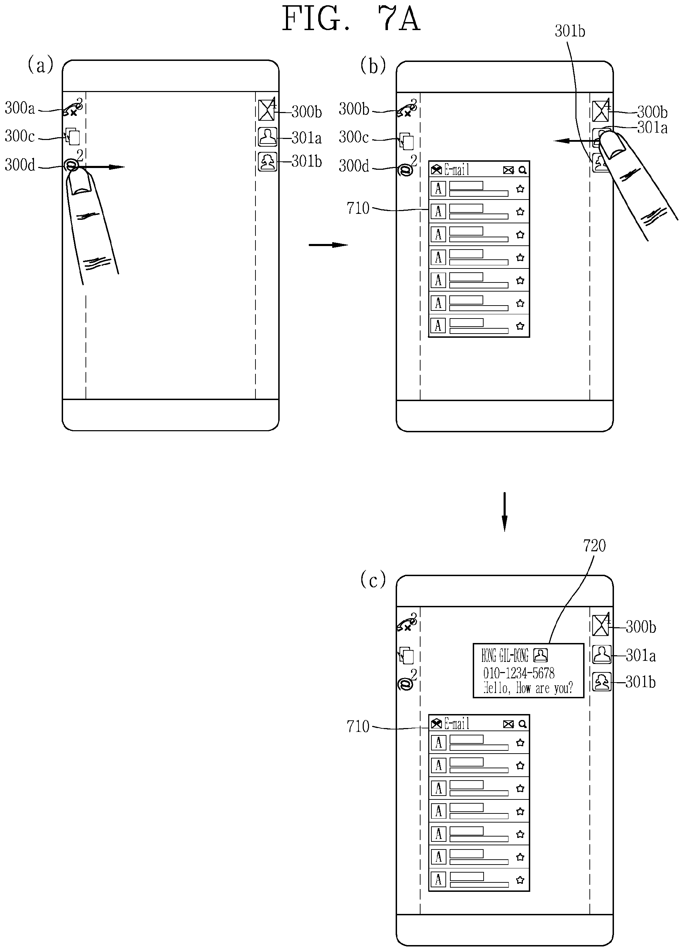

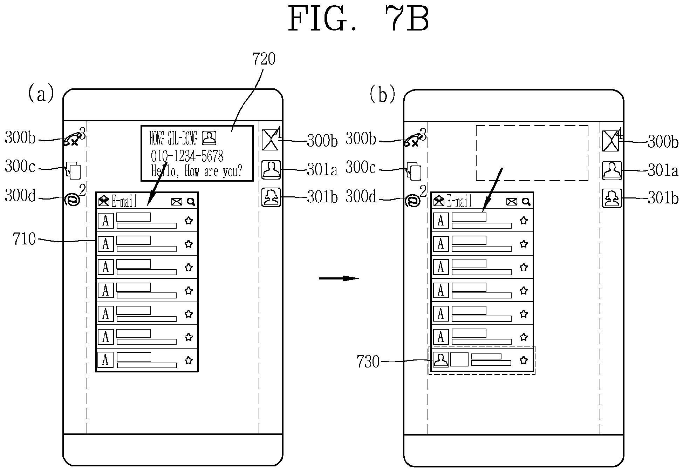

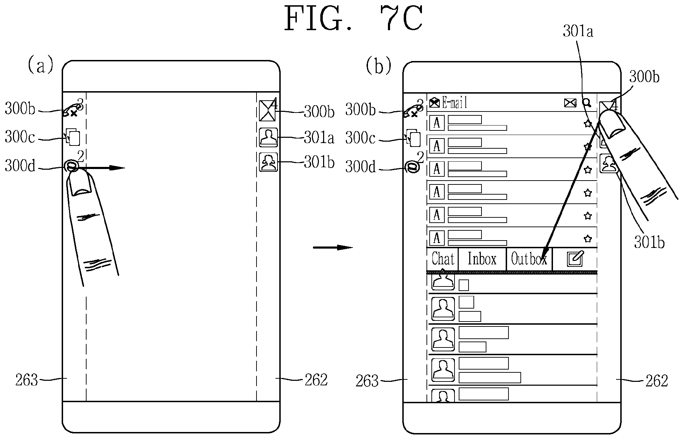

Hereinafter, a method of executing a function related to a graphic object displayed in both lateral display units will be described. FIGS. 7A, 7B, and 7C are conceptual views illustrating a method of displaying execution screens of graphic objects displayed on both lateral display units.

In the mobile terminal according to an exemplary embodiment of the present disclosure, at least one graphic object related to a function that can be driven in the mobile terminal may be displayed in the first and second regions disposed on both lateral surfaces.

In this case, as illustrated in (a) of FIG. 7A, when a pre-set type of touch is applied to the graphic object 300d among the at least one graphic object, the controller 180 may display execution screen information 710 of a function related to the graphic object 300d in at least a portion of the third region 261. For example, as illustrated in (b) of FIG. 7A, the execution screen information 710 may be displayed in the form of a pop-up in the third region 261.

Here, the pop-up window may be output on a position of the third region 261 corresponding to the position of the second region in which the graphic object 300d is displayed. In this manner, the user may recognize that the pop-up window is execution screen information related to the graphic object 300d.

As illustrated in (b) of FIG. 7A, in the state in which the execution screen information 710 related to the graphic object 300d is displayed, the controller 180 may sense a pre-set type of touch applied to the graphic object 301 a different from the graphic object 300d. In this case, as illustrated in(c) of FIG .7A, the controller 180 may display execution screen information 720 of a function related to the graphic object 301a, in the form of a pop-up window, in at least a portion of the third region 261.

Meanwhile, in the state in which the different execution screen information 710 and 720 related to different graphic objects are displayed in the third region 261, various functions may be executed by using the different execution screen information 710 and 720.

As illustrated in(a) of FIG. 7B, the user may move the pop-up window of the execution screen information 720 among the different execution screen information 710 and 720, to the pop-up window of the execution screen information 710 .

In this case, the controller 180 may share contents of the execution screen information 720 of the graphic object 301 a through a function denoted by the execution screen information 720 of the graphic object 300d. Here, sharing may refer to transmitting, storing, and utilizing the contents of the execution screen information 720 of the graphic object 301 a through a function denoted by the graphic object 300d.

For example, as illustrated in (b) of FIG. 7B, when the controller 180 moves the message execution screen information 720 to the region in which the e-mail execution screen information 710 is displayed, the controller 180 may execute a function to transmit contents of the message via an e-mail.

In this manner, the user may share various types of information between different functions by simply moving a graphic object.

Also, the third region 261 may be divided into a plurality of regions displaying the execution screen information. In this case, the number of the plurality of regions may identical to the number of execution screen information. For example, as illustrated in (a) and (b) of FIG. 7C, when two graphic objects are selected, the third region 261 may be divided into two regions. In this case, the different execution screen information may be output to the regions, respectively.

So far, displaying execution screen information, related to the graphic object displayed in the first and second regions, in the third region has been described. In this manner, the user may utilize a function related to the graphic object displayed in the first and second regions, in the third region.

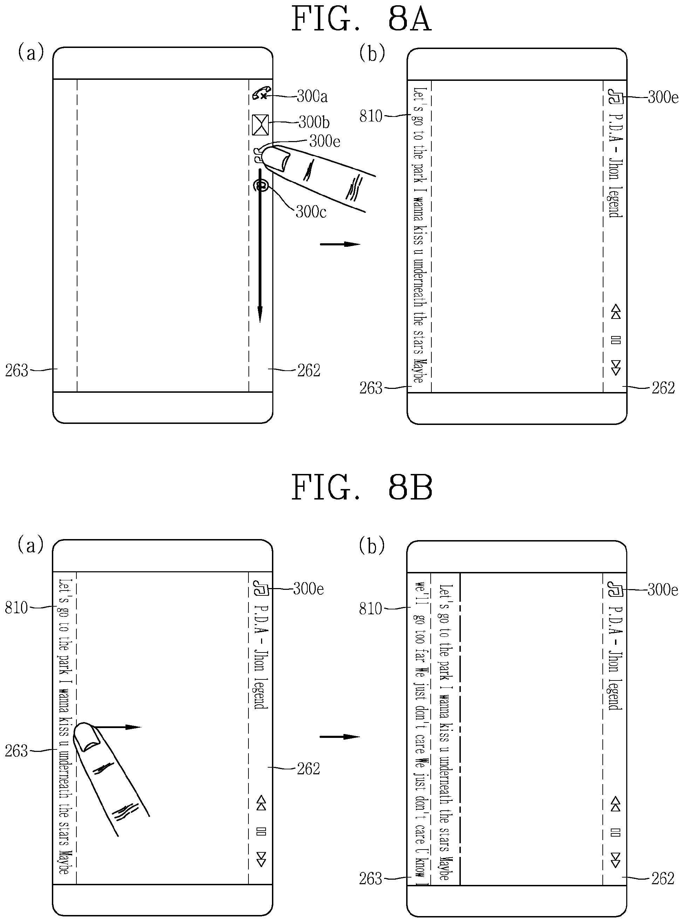

Hereinafter, a method of displaying execution screen information between both lateral display unit regions will be described. FIGS. 8A through 8D are conceptual views illustrating a method of displaying execution screen information between both lateral display unit regions.

Referring to FIG. 8A, at least one graphic object denoting a function executable in the mobile terminal may be displayed in any one region among the both lateral display regions. For example, at least one graphic object (e.g., icon) 300a, 300b, 300e, and 300c denoting applications installed in the mobile terminal may be output to the first region.

In this case, based on a pre-set type of touch applied to any one (for example, the graphic object 300e) among the at least one graphic object 300a, 300b, 300e, and 300c, the controller 180 may execute an application denoted by the graphic object 300e to which the touch has been applied.

In this case, as illustrated in (b) of FIG. 8A, an execution screen 810 of the application may be displayed in the second region among the both lateral display regions.

Namely, the user may execute a simple application by utilizing the both lateral display units. In addition, even in a state in which power is not turned on in the front display unit (or even in a state in which the front display unit is covered and invisible), functions of the mobile terminal may be utilized through the both lateral display units.

Also, the second region may extend to at least a portion of the third region by the user. For example, as illustrated in (a) of FIG. 8B, in a state in which the execution screen information 810 of an application is displayed in the second region, when a touch applied to the boundary between the second region 263 and the third region 261 is sensed, the controller 180 may extend the second region 263 to a portion of the third region 261.

In this manner, when the execution screen information is displayed on the lateral display units, the user may extend the lateral display unit to conveniently view the execution screen information.

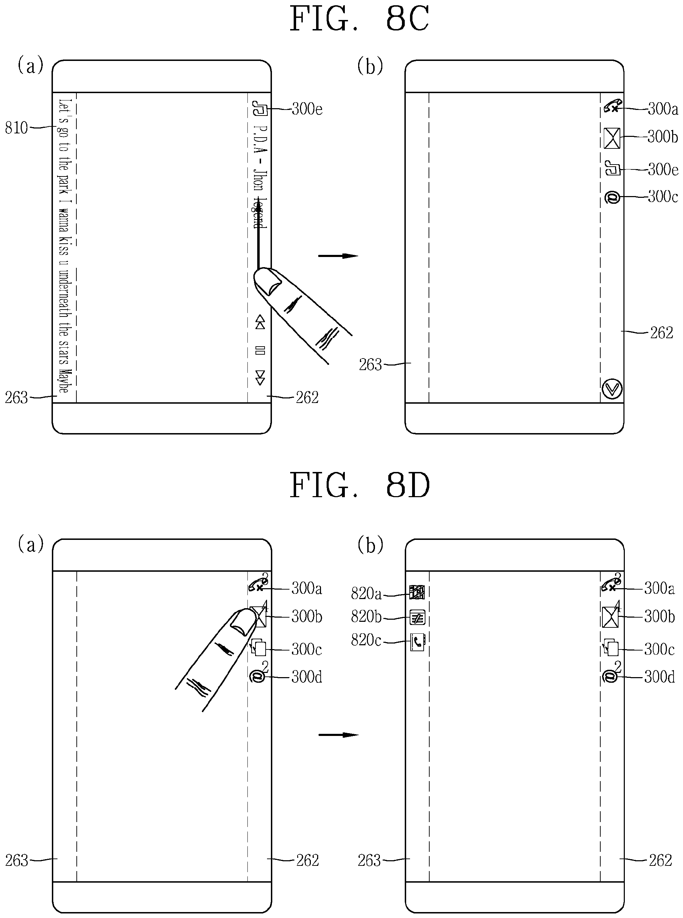

Meanwhile, as illustrated in (a) and (b) of FIG. 8C, in a state in which the execution screen information 810 is displayed in the second region, when a pre-set type of touch applied to the first region 262 is sensed, the execution screen information 810 displayed in the second region may disappear.

Namely, based on a pre-set type of touch applied to the first region 262, the controller 810 may terminate the current execution of the application and make the execution screen information 810 displayed in the second region 263 disappear in conjunction with the termination of the execution.

Also, when a graphic object displayed in the first region 262 is selected, the controller 180 may display a function related to a function denoted by the graphic object in the second region 263. Here, the related function may be a function that is frequently executed together with the graphic object, a function that is recommended to be executed together, and the like. This may be previously set or may be determined by a usage pattern of the user. Also, the related function may be determined through analysis of contents of the selected graphic object. For example, in a case in which the selected graphic object is a graphic object denoting a message function, the controller 180 may analyze the contents of the message and detect a map function, an address list function, and the like, as a recommendation function.

For example, as illustrated in (a) and (b) of FIG. 8D, when the graphic object 300b, among the graphic objects 300a, 300b, 300c, and 300d displayed in the first region 262, is selected, the controller 180 may display graphic objects 820a, 820b, and 820c denoting a function related to the graphic object 300b in the second region 263.

In this manner, the user may execute various functions by utilizing the lateral display unit.

Meanwhile, in the above, the case in which when a graphic object displayed in the first region 262 is selected, an execution screen information related to the selected graphic object and a related function thereof are displayed in the second region 263 has been described, but the present disclosure is not limited thereto and may be applied to the third region 261 in the same manner.

So far, controlling the second region 263 with a control command with respect to the first region 262 has been described. In this manner, the user may execute various function only with the lateral display units without having to utilize the front display unit.

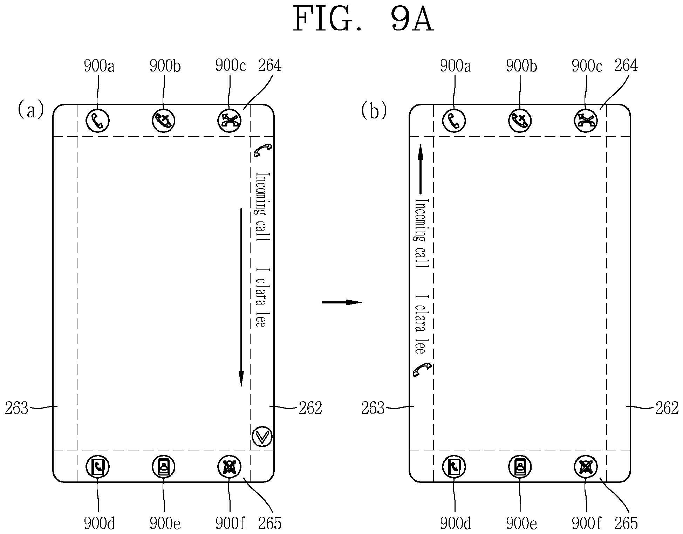

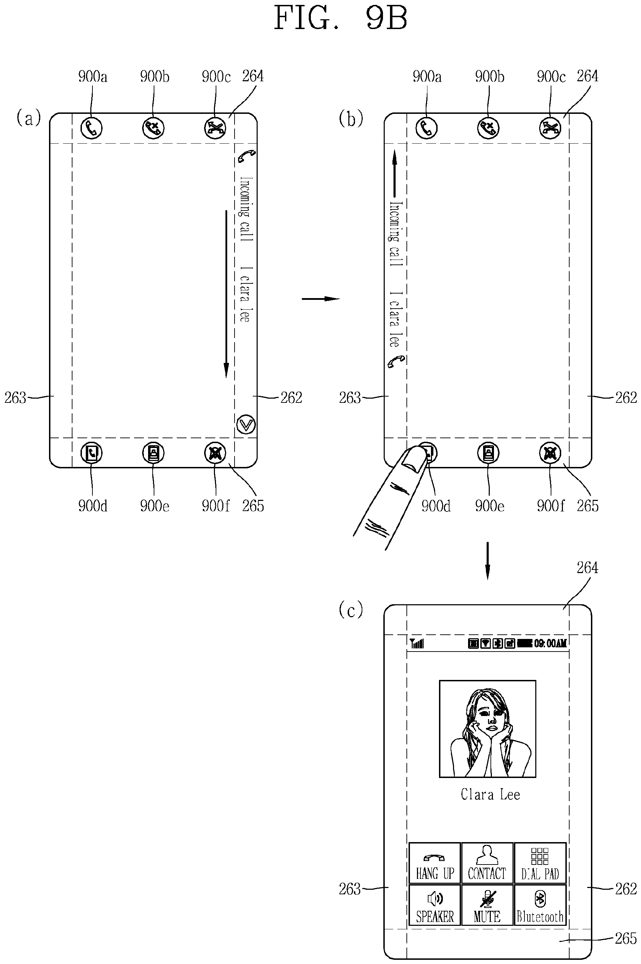

Hereinafter, a case in which lateral display units are provided in upper, lower, left, and right portions based on the front surface of the terminal body will be described. FIGS. 9A and 9B are conceptual views illustrating a control method when display units are provided in upper, lower, left, and right lateral portions based on a front surface of the terminal body.

The mobile terminal according to an exemplary embodiment of the present disclosure may further include upper, lower, left and right display units based on the front surface of the terminal body thereof.

Namely, the left and right display units may be referred to as first and second regions, the front display unit may be referred to as a third region, and the upper and lower display units may be referred to as fourth and fifth regions.

The upper, lower, left, right, and front display units may be connected to each other or may be disposed to be adjacent to each other.

In a case in which a plurality of regions of display units exist, the controller 180 may provide various interfaces by utilizing the plurality of regions of display units. For example, the controller 180 may display a graphic object related to screen information displayed on the left and right display units, in the upper and lower display units.

As illustrated in (a) of FIG 9A, when a call signal is received, the controller 180 may display notification information indicating that the call signal has been received, in at least a portion of the left and right display units. In this case, as illustrated in (b) of FIG. 9A, the notification information may be displayed, while moving the first and second regions.

Also, at least one graphic objects 900a, 900b, 900c, 900d, 900e, and 900f denoting functions related to the call signal may be displayed in the upper and lower display units.

For example, the at least one graphic object may include a call signal reception function, a call signal refusal function, a function to indicate external terminal information that has transmitted the call signal, a function to switch to a video call, and the like.

Also, as illustrated in (a) and (b) of FIG. 9B, when the graphic object 900d denoting a call signal reception function, among the at least one graphic object displayed on the upper and lower display units, is selected, the controller 180 may execute the function to receive the call signal. In this case, as illustrated in (c) of FIG. 9B, execution screen information related to the call signal reception may be displayed in the third region.

In this manner, the user may variously utilize the four regions of lateral display units

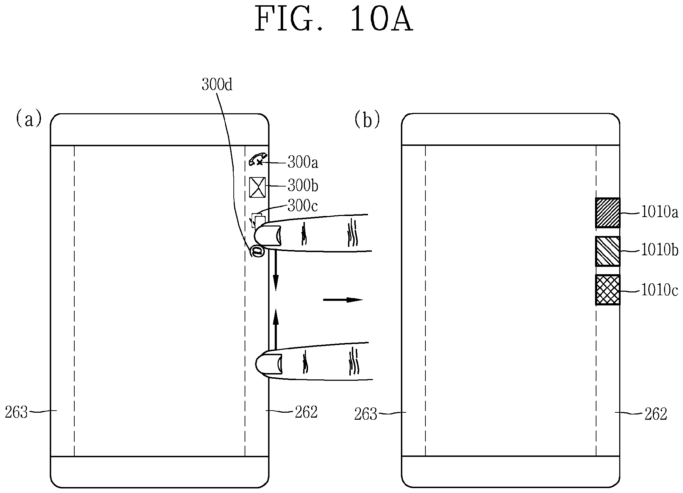

Hereinafter, a method of visually simplifying a graphic object displayed on a lateral display unit and displaying the same will be described. FIGS. 10A through 10C are conceptual views illustrating a method of visually simplifying graphic objects displayed on a lateral display unit.

In a case in which a plurality of graphic objects 300a, 300b, 300c, and 300d are displayed in the first region 262, the controller 180 may simplify the graphic objects in order to reduce complexity. For example, as illustrated in (a) of FIG. 10A, when a pre-set type of touch is applied, the controller 180 may simplify the plurality of graphic objects 300a, 300b, 300c, and 300d displayed in the first region 262. Here, the pre-set type of touch may be a pinch-in touch.

The simplified displaying may refer to classifying the plurality of graphic objects 300a, 300b, 300c, and 300d into at least one group according to pre-set conditions such as classification according to types of the plurality of graphic objects 300a, 300b, 300c, and 300d, classification according to use frequency of the plurality of graphic objects 300a, 300b, 300c, and 300d, and the like, and displaying the same.

For example, as illustrated in (b) of FIG. 10A, the controller 180 may classify the plurality of graphic objects 300a, 300b, 300c, and 300d into at least one group 1010a, 1010b, and 1010c according to pre-set conditions, and display the at least one group to be visually differentiated. In this case, displaying each group to be visually differentiated may refer to differentiating each group in color or in form.

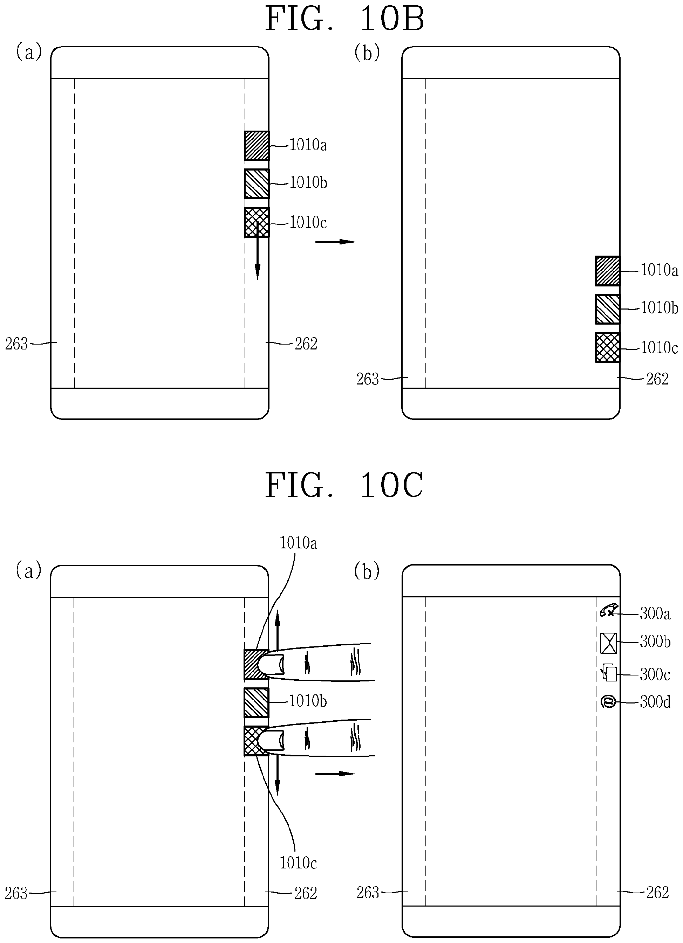

Also, in the state in which the plurality of graphic objects 300a, 300b, 300c, and 300d are classified into the at least one group 1010a, 1010b, and 1010c, when a control command is applied to the at least one group 1010a, 1010b, and 1010c, the controller 180 may edit the at least one group 1010a, 1010b, and 1010c at a time in response to the control command. For example, as illustrated in (a) of FIG. 10B, a drag input may be applied to a certain region among the regions in which the at least one group 1010a, 1010b, and 1010c are displayed. In this case, as illustrated in (b) of FIG. 10B, the controller 180 may change an output position of the entirety of the at least one group 1010a, 1010b, and 1010c at a time.

Also, as illustrated in (a) of FIG. 10C, when a pre-set type of touch is applied to the at least one group 1010a, 1010b, and 1010c, the controller 180 may change the at least one group 1010a, 1010b, and 1010c into the plurality of graphic objects 300a, 300b, 300c, and 300d. Here, the pre-set type of touch may be a pinch-out touch.

In this manner, the user may reduce complexity of the lateral display units. Also, since the group displayed to be simplified is edited, various functions can be edited at a time.

In an exemplary embodiment of the present disclosure, associated functions may be performed between the display units provided on the both sides of the mobile terminal or associated functions may be recommended therebetween. In this manner, even in a state in which the main display unit is turned off, the user may execute various functions easily by utilizing the lateral display units.

Also, in an exemplary embodiment of the present disclosure, different functions may be executed according to pre-set types of touches applied to graphic objects displayed on the display units provided on the sides of the mobile terminal. Thus, the user may execute various functions through a simple touch manipulation. Thus, user convenience can be enhanced in using the lateral display units.

The present invention described above may be implemented as a computer-readable code in a medium in which a program is recorded. The computer-readable medium includes any type of recording device in which data that can be read by a computer system is stored. The computer-readable medium may be, for example, a hard disk drive (HDD), a solid state disk (SSD), a silicon disk drive (SDD), a ROM, a RAM, a CD-ROM, a magnetic tape, a floppy disk, an optical data storage device, and the like. The computer-readable medium also includes implementations in the form of carrier waves (e.g., transmission via the Internet). Also, the computer may include the controller 180 of the terminal. Thus, the foregoing detailed description should not be interpreted limitedly in every aspect and should be considered to be illustrative. The scope of the present invention should be determined by reasonable interpretations of the attached claims and every modification within the equivalent range are included in the scope of the present invention.

The foregoing embodiments and advantages are merely exemplary and are not to be considered as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal comprising:
a terminal body (100) including a front surface, a lateral surface, and a rear surface, wherein the lateral surface comprises a left lateral surface and a right lateral surface;
a touch display unit (151) including a first region (262) disposed on the left lateral surface of the terminal body (100), a second region (263) disposed on the right lateral surface of the terminal body (100), and a third region (261) disposed on the front surface; and
a controller (180) configured to:
display a graphic object (300b) indicating the occurrence of an event on the first region (262), when a pre-set type of touch is applied to the graphic object (300b), display notification information (310) related to the graphic object (300b) in the second region (263) to allow contents related to the event to be read, and
when the notification information (310) displayed in the second region (263) is selected, display contents related to the event,
wherein, when a drag input starts from the first region (262), passing through the third region (261), and reaches the second region (263), the controller (180) is further configured to execute a pre-set function related to the graphic object (300b).

2. The mobile terminal of claim 1, wherein the notification information (310) displayed in the second region (263) is the graphic object which was displayed in the first
region (262) and which has been moved to the second region (263).

3. The mobile terminal of claim 1 to 2, wherein when the graphic object (300b) is moved to the second region (263) from the first region (262), the moved graphic object (300b) is no longer displayed in the first region (262).

4. The mobile terminal of claim 3, wherein the second region (263) includes a first sub-region (264) in which the notification information (310) is displayed, and
wherein when a pre-set period of time has lapsed, the first sub-region (264) disappears from the second region (263) together with the notification information (310) displayed in the first sub-region (264).

5. The mobile terminal of claim 4, wherein, when the first sub-region (264) is not displayed in the second region (263), and when a pre-set type of touch is applied to the second region (263), the first sub-region (264) is displayed in a sliding manner in the second region (263), and the notification information (310) included in the first sub-region (264) is displayed together with the first sub-region (264).

6. The mobile terminal of claim 1, wherein a plurality of graphic objects (300a, 300b, 300c, 300d) corresponding to different events are displayed in the first region (262),
wherein the second region (263) comprises a first sub-region (264) and a second sub-region,
wherein the controller(180) is further configured to:
sense the pre-set type of touch that has been applied to the graphic object (300b), among the plurality of graphic objects (300a, 300b, 300c, 300d), and
display the notification information (310) related to the graphic object (300b) on the first sub-region (264) and the graphic objects (300a, 300c, 300d) of the plurality of graphic objects (300a, 300b, 300c, 300d) excluding the graphic object (300b) on the second sub-region.

7. The mobile terminal of claim 6, wherein when the graphic object (300b) among the plurality of graphic objects is selected, the controller (180) is further configured to display information related to the graphic object (300b) to a vicinity region where the graphic object (300b) is displayed.

8. The mobile terminal of claim 1, wherein the controller is further configured to:
display a first graphic object (301a) in the first region (262) and a second graphic object (300d) in the second region (263);
display screen information related to the second graphic object (300d) in a portion of the third region (264) when a pre-set touch is applied to the second graphic object (300d);
sense a pre-set touch applied to the first graphic object (301a) in a state where the screen information related to the second graphic object (300d) is displayed; and
display screen information related to the first graphic object (301a) in another portion of the third region (264) together with the screen information related to the second graphic object (300d) when the pre-set touch is applied to the first graphic object (301a).

## Patentansprüche

1. Mobiles Endgerät, das umfasst:
einen Endgerätkörper (100), der eine vordere Fläche, eine Seitenfläche und eine hintere Fläche enthält, wobei die Seitenfläche eine linke Seitenfläche und eine rechte Seitenfläche umfasst;
eine Berührungsanzeigeeinheit (151), die einen ersten Bereich (262), der auf der linken Seitenfläche des Endgerätkörpers (100) angeordnet ist, einen zweiten Bereich (263), der auf der rechten Seitenfläche des Endgerätkörpers (100) angeordnet ist, und einen dritten Bereich (261), der auf der vorderen Fläche angeordnet ist, enthält; und
eine Steuereinheit (180), die konfiguriert ist:
ein Grafikobjekt (300b) anzuzeigen, das das Auftreten eines Ereignisses auf dem ersten Bereich (262) angibt, wenn ein im Voraus festgelegter Typ einer Berührung auf das Grafikobjekt (300b) ausgeübt wird, und Benachrichtigungsinformationen (310), die sich auf das Grafikobjekt (300b) beziehen, in dem zweiten Bereich (263) anzuzeigen, um zu erlauben, dass Inhalte, die sich auf das Ereignis beziehen, gelesen werden, und
dann, wenn die Benachrichtigungsinformationen (310), die in dem zweiten Bereich (263) angezeigt werden, ausgewählt werden, Inhalte anzuzeigen, die sich auf das Ereignis beziehen,
wobei dann, wenn eine Zieheingabe von dem ersten Bereich (262) startet, durch den dritten Bereich (261) hindurchführt und den zweiten Bereich (263) erreicht, die Steuereinheit (180) ferner konfiguriert ist, eine im Voraus festgelegte Funktion auszuführen, die sich auf das Grafikobjekt (300b) bezieht.

2. Mobiles Endgerät nach Anspruch 1, wobei die Benachrichtigungsinformationen (310), die in dem zweiten Bereich (263) angezeigt werden, das Grafikobjekt sind, das in dem ersten Bereich (262) angezeigt wurde und das zu dem zweiten Bereich (263) bewegt wurde.

3. Mobiles Endgerät nach Anspruch 1 bis 2, wobei dann, wenn das Grafikobjekt (300b) von dem ersten Bereich (262) zu dem zweiten Bereich (263) bewegt wird, das bewegte Grafikobjekt (300b) nicht länger in dem ersten Bereich (262) angezeigt wird.

4. Mobiles Endgerät nach Anspruch 3, wobei der zweite Bereich (263) einen ersten Unterbereich (264) enthält, in dem die Benachrichtigungsinformationen (310) angezeigt werden, und
wobei dann, wenn eine im Voraus festgelegte Zeitdauer abgelaufen ist, der erste Unterbereich (264) zusammen mit den Benachrichtigungsinformationen (310), die in dem ersten Unterbereich (264) angezeigt werden, von dem zweiten Bereich (263) verschwindet.

5. Mobiles Endgerät nach Anspruch 4, wobei dann, wenn der erste Unterbereich (264) nicht in dem zweiten Bereich (263) angezeigt wird und wenn ein im Voraus festgelegter Typ einer Berührung auf den zweiten Bereich (263) ausgeübt wird, der erste Unterbereich (264) in einer gleitenden Weise in dem zweiten Bereich (263) angezeigt wird und die Benachrichtigungsinformationen (310), die in dem ersten Unterbereich (264) enthalten sind, zusammen mit dem ersten Unterbereich (264) angezeigt werden.

6. Mobiles Endgerät nach Anspruch 1, wobei mehrere Grafikobjekte (300a, 300b, 300c, 300d), die verschiedenen Ereignissen entsprechen, in dem ersten Bereich (262) angezeigt werden,
wobei der zweite Bereich (263) einen ersten Unterbereich (264) und einen zweiten Unterbereich umfasst,
wobei die Steuereinheit (180) ferner konfiguriert ist:
den im Voraus festgelegten Typ der Berührung zu erfassen, die auf das Grafikobjekt (300b) unter den mehreren Grafikobjekten (300a, 300b, 300c, 300d) ausgeübt wurde, und
die Benachrichtigungsinformationen (310), die sich auf das Grafikobjekt (300b) beziehen, auf dem ersten Unterbereich (264) und die Grafikobjekte (300a, 300c, 300d) der mehreren Grafikobjekte (300a, 300b, 300c, 300d), die das Grafikobjekt (300b) ausschließen, auf dem zweiten Unterbereich anzuzeigen.

7. Mobiles Endgerät nach Anspruch 6, wobei dann, wenn das Grafikobjekt (300b) unter den mehreren Grafikobjekten ausgewählt wird, die Steuereinheit (180) ferner konfiguriert ist, Informationen, die sich auf das Grafikobjekt (300b) beziehen, in einem Nachbarschaftsbereich, in dem das Grafikobjekt (300b) angezeigt wird, anzuzeigen.

8. Mobiles Endgerät nach Anspruch 1, wobei die Steuereinheit ferner konfiguriert ist:
ein erstes Grafikobjekt (301a) in dem ersten Bereich (262) und ein zweites Grafikobjekt (300d) in dem zweiten Bereich (263) anzuzeigen;
Bildschirminformationen, die sich auf das zweite Grafikobjekt (300d) beziehen, in einem Teil des dritten Bereichs (264) anzuzeigen, wenn eine im Voraus festgelegte Berührung auf das zweite Grafikobjekt (300d) ausgeübt wird;
eine im Voraus festgelegte Berührung, die auf das erste Grafikobjekt (301a) ausgeübt wird, in einem Zustand, in dem die Bildschirminformationen, die sich auf das zweite Grafikobjekt (300d) beziehen, angezeigt werden, zu erfassen; und
Bildschirminformationen, die sich auf das erste Grafikobjekt (301a) beziehen, in einem anderen Teil des dritten Bereichs (264) zusammen mit den Bildschirminformationen, die sich auf das zweite Grafikobjekt (300d) beziehen, anzuzeigen, wenn die im Voraus festgelegte Berührung auf das erste Grafikobjekt (301a) ausgeübt wird.

## Revendications

1. Terminal mobile comprenant :
un corps de terminal (100) comprenant une surface avant, une surface latérale et une surface arrière, dans lequel la surface latérale comprend une surface latérale gauche et une surface latérale droite ;
une unité d'affichage tactile (151) comprenant une première région (262) disposée sur la surface latérale gauche du corps de terminal (100), une deuxième région (263) disposée sur la surface latérale droite du corps de terminal (100), et une troisième région (261) disposée sur la surface avant ; et
un organe de commande (180) configuré pour effectuer :
l'affichage d'un objet graphique (300b) indiquant la survenance d'un événement sur la première région (262), lorsqu'un type préréglé de toucher est appliqué sur l'objet graphique (300b), l'affichage d'informations de notification (310) relatives à l'objet graphique (300b) dans la deuxième région (263) pour permettre la lecture d'un contenu relatif à l'événement, et
lorsque les informations de notification (310) affichées dans la deuxième région (263) sont sélectionnées, l'affichage du contenu relatif à l'événement,
dans lequel, lorsqu'une entrée de glissement commence à partir de la première région (262), traverse la troisième région (261) et atteint la deuxième région (263), l'organe de commande (180) est en outre configuré pour exécuter une fonction préréglée relative à l'objet graphique (300b).

2. Terminal mobile selon la revendication 1, dans lequel les informations de notification (310) affichées dans la deuxième région (263) constituent l'objet graphique qui était affiché dans la première région (262) et qui a été déplacé dans la deuxième région (263).

3. Terminal mobile selon la revendication 1 ou 2, dans lequel, lorsque l'objet graphique (300b) est déplacé de la première région (262) à la deuxième région (263), l'objet graphique déplacé (300b) n'est plus affiché dans la première région (262).

4. Terminal mobile selon la revendication 3, dans lequel la deuxième région (263) comprend une première sous-région (264) dans laquelle les informations de notification (310) sont affichées, et
dans lequel, lorsqu'une période de temps préréglée s'est écoulée, la première sous-région (264) disparaît de la deuxième région (263) tout comme les informations de notification (310) affichées dans la première sous-région (264).

5. Terminal mobile selon la revendication 4, dans lequel, lorsque la première sous-région (264) n'est pas affichée dans la deuxième région (263), et lorsqu'un type préréglé de toucher est appliqué à la deuxième région (263), la première sous-région (264) est affichée de manière coulissante dans la deuxième région (263), et les informations de notification (310) incluses dans la première sous-région (264) sont affichées avec la première sous-région (264).

6. Terminal mobile selon la revendication 1, dans lequel une pluralité d'objets graphiques (300a, 300b, 300c, 300d) correspondant à différents événements sont affichés dans la première région (262),
dans lequel la deuxième région (263) comprend une première sous-région (264) et une deuxième sous-région,
dans lequel l'organe de commande (180) est en outre configuré pour effectuer :
la détection du type préréglé de toucher qui a été appliqué à l'objet graphique (300b), parmi la pluralité d'objets graphiques (300a, 300b, 300c, 300d), et
l'affichage des informations de notification (310) relatives à l'objet graphique (300b) sur la première sous-région (264) et des objets graphiques (300a, 300c, 300d) de la pluralité d'objets graphiques (300a, 300b, 300c, 300d) à l'exclusion de l'objet graphique (300b) sur la deuxième sous-région.

7. Terminal mobile selon la revendication 6, dans lequel, lorsque l'objet graphique (300b) parmi la pluralité d'objets graphiques est sélectionné, l'organe de commande (180) est en outre configuré pour afficher des informations relatives à l'objet graphique (300b) dans une région de proximité dans laquelle l'objet graphique (300b) est affiché.

8. Terminal mobile selon la revendication 1, dans lequel l'organe de commande est en outre configuré pour effectuer :
l'affichage d'un premier objet graphique (301a) dans la première région (262) et d'un deuxième objet graphique (300d) dans la deuxième région (263) ;
l'affichage d'informations d'écran relatives au deuxième objet graphique (300d) dans une portion de la troisième région (264) lorsqu'un toucher préréglé est appliqué au deuxième objet graphique (300d) ;
la détection d'un toucher préréglé appliqué au premier objet graphique (301a) dans un état dans lequel les informations d'écran relatives au deuxième objet graphique (300d) sont affichées ; et
l'affichage d'informations d'écran relatives au premier objet graphique (301a) dans une autre portion de la troisième région (264) avec les informations d'écran relatives au deuxième objet graphique (300d) lorsque le toucher préréglé est appliqué au premier objet graphique (301a).
